(19) Europäisches Patentamt
European Patent Office
Office européen des brevets

(11) **EP 4 661 488 A1**

(12) **EUROPEAN PATENT APPLICATION**
published in accordance with Art. 153(4) EPC

(43) Date of publication:
**10.12.2025 Bulletin 2025/50**

(21) Application number: **24749582.3**

(22) Date of filing: **24.01.2024**

(51) International Patent Classification (IPC):
*H04W 28/08* (2023.01)

(52) Cooperative Patent Classification (CPC):
**H04W 28/08; H04W 28/082; H04W 76/15;
H04W 88/04**

(86) International application number:
**PCT/CN2024/073788**

(87) International publication number:
**WO 2024/160101 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2023 CN 202310092036**

(71) Applicant: **Sony Group Corporation
Tokyo 108-0075 (JP)**

(72) Inventors:
• **WANG, Xiaoxue
Beijing 100027 (CN)**

• **SUN, Chen
Beijing 100027 (CN)**
• **ZHENG, Tao
Wuxi, Jiangsu 214002 (CN)**
• **ZHANG, Jinbang
Wuxi, Jiangsu 214002 (CN)**
• **WU, Juqiang
Wuxi, Jiangsu 214002 (CN)**
• **ZHANG, Zhaoyu
Beijing 100027 (CN)**

(74) Representative: **D Young & Co LLP
3 Noble Street
London EC2V 7BQ (GB)**

(54) **ELECTRONIC DEVICE, COMMUNICATION METHOD, AND COMPUTER READABLE STORAGE MEDIUM**

(57) The present disclosure relates to an electronic device, a communication method and a computer-readable storage medium. An electronic device for an aggregation initiating user equipment (UE), comprising processing circuitry configured to: obtain transmission condition information of the aggregation initiating UE and at least one aggregation cooperating UE; based on the obtained transmission condition information, divide transmission data into a first data portion to be transmitted by the aggregation initiating UE and at least one second data portion to be transmitted respectively by the at least one aggregation cooperating UE; transmit the first data portion to an aggregation server via a base station; and transmit the at least one second data portion to the at least one aggregation cooperating UE, respectively, for the aggregation cooperating UE to transmit respective second data portion to the aggregation server via the base station, wherein the first data portion and the at least one second data portion are aggregated and transmitted to a target node by the aggregation server.

FIG. 1

**Description**

## CROSS REFERENCE TO RELATED APPLICATIONS

This application claims priority of Chinese Patent Application No. 2023100920366 entitled "Electronic Device, Communication Method and Computer-Readable Storage Medium" filed on January 30, 2023, which is incorporated herein by reference in its entirety.

## FIELD OF THE INVENTION

The present disclosure relates to uplink transmission in a wireless communication network, and more particularly to an electronic device, a communication method and a computer-readable storage medium for multi-user cooperative transmission of wireless data.

## BACKGROUND

With developments of wireless communication technology, more and more applications and services can be accessed via cellular networks. At present, 5G communication networks can provide users with high-speed data communication. However, user experiences on downlink communication (from a base station to a user terminal) and uplink communication (from a user terminal to a base station) may be asymmetric. Higher uplink communication rate and more robust network support are required to realize some services, such as real-time uploading of high-definition videos such as 4K and 8K, sensor data transmission under autonomous driving scenarios, and the like.

At present, wireless communication networks, especially mobile cellular networks, may not be able to provide high-speed and reliable data communication that meets needs of a user in some cases (for example, when the user's terminal is at the edge of a cell or is moving at a high speed, or when the user needs to upload video service streams with a high bit rate in real time).

Therefore, there is a need for enhanced uplink data transmission so as to adapt to various existing or emerging service scenarios.

## SUMMARY OF THE INVENTION

The present disclosure provides a number of aspects. The above-described need may be met by applying one or more aspects of the present disclosure.

A brief summary regarding the present disclosure is given here to provide a basic understanding of some aspects of the present disclosure. However, it will be appreciated that the summary is not an exhaustive description of the present disclosure. It is not intended to identify key portions or important portions of the present disclosure, nor to limit the scope of the present disclosure. It aims at merely describing some concepts about the present disclosure in a simplified form and serves as a preorder of a more detailed description to be given later.

According to one aspect of the present disclosure, there is provided an electronic device for an aggregation initiating user equipment (UE), comprising processing circuitry configured to: obtain transmission condition information of the aggregation initiating UE and at least one aggregation cooperating UE; based on the obtained transmission condition information, divide transmission data into a first data portion to be transmitted by the aggregation initiating UE and at least one second data portion to be transmitted respectively by the at least one aggregation cooperating UE; transmit the first data portion to an aggregation server via a base station; and transmit the at least one second data portion to the at least one aggregation cooperating UE, respectively, for the aggregation cooperating UE to transmit respective second data portion to the aggregation server via the base station, wherein the first data portion and the at least one second data portion are aggregated and transmitted to a target node by the aggregation server.

According to another aspect of the present disclosure, there is provided an electronic device for an aggregation cooperating user equipment (UE), comprising processing circuitry configured to: receive a second data portion of transmission data from an aggregation initiating UE, wherein the transmission data was divided, based on transmission condition information of the aggregation initiating UE and at least one aggregation cooperating UE, into a first data portion to be transmitted to an aggregation server by the aggregation initiating UE and at least one second data portion to be transmitted to the aggregation server by the at least one aggregation cooperating UE; and transmit the second data portion to the aggregation server via a base station, wherein the first data portion and the at least one second data portion are aggregated and transmitted to a target node by the aggregation server.

According to another aspect of the present disclosure, there is provided a electronic device for a base station, comprising processing circuitry configured to: send, to an aggregation initiating user equipment (UE), resource allocation information for the aggregation initiating UE and at least one aggregation cooperating UE; receive a first data portion and at least one second data portion of transmission data from the aggregation initiating UE and the at least one aggregation cooperating UE, respectively, wherein the first data portion and the at least one second data portion of the transmission data were divided by the aggregation initiating UE based on the resource allocation information; and aggregate the first data portion and the at least one second data portion and transmit aggregated data to a target node.

According to another aspect of the present disclosure, there is provided a communication method, comprising steps performed by any of the above processing circuitry.

According to another aspect of the present disclosure, there is provided a non-transitory computer-readable storage medium storing executable instructions which, when executed, implement any of the communication methods as described above.

## DESCRIPTION OF THE DRAWINGS

A better understanding of the present disclosure may be achieved by referring to a detailed description given hereinafter in connection with accompanying drawings, wherein the same or similar reference signs are used to indicate the same or similar elements throughout the drawings. All figures are to be included in and form a part of the specification along with the following detailed descriptions, for further illustrating embodiments of the present disclosure and for explaining the theory and advantages of the present disclosure. Wherein,

> FIG. 1 illustrates an exemplary system architecture for cooperative transmission of wireless data according to the present disclosure;
> FIG. 2 illustrates a block diagram of configuration of a cooperative transmission system according to the present disclosure;
> FIG. 3 illustrates a block diagram of an exemplary configuration of a cooperative transmission system according to a first embodiment of the present disclosure;
> FIG. 4 illustrates a flowchart that can be implemented by the cooperative transmission system in FIG. 3 according to the first embodiment;
> FIG. 5 illustrates a block diagram of an exemplary configuration of a cooperative transmission system according to a second embodiment of the present disclosure;
> FIG. 6 illustrates an NR radio protocol stack for user planes of a UE and a base station;
> FIG. 7 illustrates a frame structure in a 5G communication system;
> FIGS. 8-10 illustrate flowcharts that can be implemented by the cooperative transmission system shown in FIG. 5 according to the second embodiment;
> FIG. 11 illustrates an exemplary flowchart for adjusting the cooperative transmission;
> FIG. 12 illustrates an example block diagram of a computer that can be implemented as either a user equipment or a control device according to the present disclosure;
> FIG. 13 illustrates a first example of schematic configuration of the base station according to the present disclosure;
> FIG. 14 illustrates a second example of schematic configuration of the base station according to the present disclosure;
> FIG. 15 illustrates an example of schematic configuration of a smartphone according to the present disclosure;

> FIG. 16 illustrates an example of schematic configuration of a car navigation device according to the present disclosure;

Further features and aspects of the present disclosure will become apparent from the following description with reference to the attached drawings.

## DETAILED DESCRIPTION OF PREFERRED EMBODIMENTS

Various exemplary embodiments of the present disclosure will be described hereinafter with reference to the drawings. For purpose of clarity and simplicity, not all implementations of the embodiments are described in the specification. Note that, however, many settings specific to the implementations can be made in practicing the embodiments of the present disclosure according to specific requirements, so as to achieve specific goals of the developers, for example, to comply with constraints related to the device or service, which may vary from implementations. Moreover, it should be known that although the development work may be relatively complex and time-consuming, for those technicians in this art benefiting from the present disclosure, such development is merely a routine task.

In addition, it should be noted that in some of the figures, only processing steps and/or device components that are closely related to the technical contents according to the present disclosure are illustrated to avoid obscuring the present disclosure with unnecessary details, while in some other figures, existing processing steps and/or device components are additionally shown for better understanding of the present disclosure.

The exemplary embodiments and application instances according to the present disclosure will be described in detail with reference to accompanying figures. Descriptions of the following exemplary embodiments are merely illustrative, and are not intended to limit the present disclosure or its applications in any way.

For the purpose of convenient explanation, various aspects of the present disclosure will be described below in context of 5G new radio (NR). However, it should be noted that this is not a limitation on the scope of application of the present disclosure. One or more aspects of the present disclosure can also be applied to existing wireless communication systems, such as 4G LTE/LTE-A, or various wireless communication systems to be developed in future. The architecture, entities, functions, processes and the like as described in the following description can be found in in the NR or other communication standard.

[Overview]

Wireless communication systems such as the 5G NR provide a capability of high-speed communication, which allows rapid development of many services.

As a typical example, cloud broadcasting moves the function of a traditional satellite broadcast vehicle to a cloud, and 4K or 8K high-definition video signals from scenes such as a sports event, an artistic performance, a large conference or the like can be transmitted to a cloud broadcasting platform via a 5G terminal using a cellular network, which greatly expands the range of live broadcasting/rebroadcasting and reduces the burden on the staff. Another example is autonomous driving, where various sensor data of an automobile can be uploaded to a cloud platform in real time via a 5G communication network, for purpose of recording or making control decisions. The requirement of these services on a large bandwidth of uplink communication may pose challenges to the wireless communication network, especially when users are located at the edge of a cell or moving at a high speed. In actual use, there may be situations where the transmission rate is limited, a packet loss rate is high, or a backup upload link is needed.

Multi-user cooperative transmission may be a solution. However, in existing cooperative transmission schemes, multiple user terminals usually upload the same data to obtain a certain diversity gain, and the improvement in transmission efficiency is limited. Moreover, user terminals in different operator networks cannot achieve effective direct communications between the users, which will lead to difficulties in realizing the cooperative transmission between the user terminals of different operators.

In view of the above, the present disclosure aims to provide an efficient and complete cooperative transmission scheme so as to meet the above-mentioned or any other service requirements.

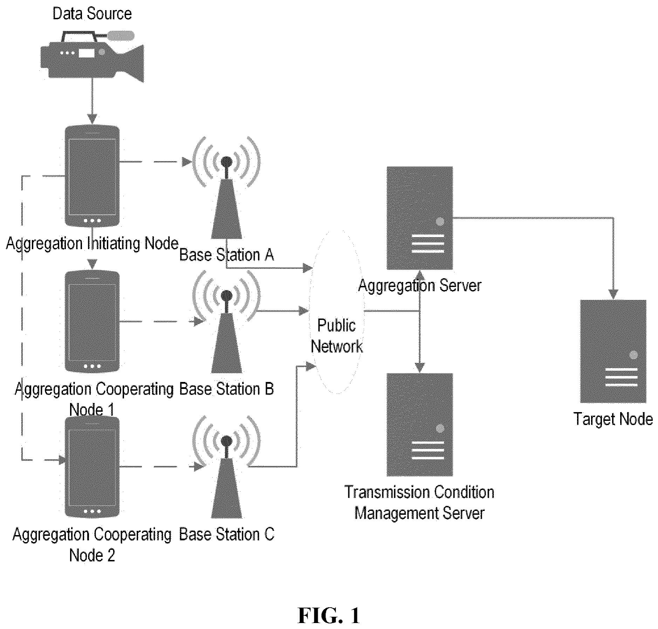

FIG. 1 illustrates an exemplary system architecture for wireless data cooperative transmission according to the present disclosure. As shown in the figure, the system according to the present disclosure includes a data source, an aggregation initiating node, an aggregation cooperating node, a base station, a public network, an aggregation server, a transmission condition management server, a target node, and the like.

According to embodiments of the present disclosure, the aggregation initiating node and the aggregation cooperating node are user equipments (UEs) in a wireless communication system that can communicate with the base station. In the context of the present disclosure, the term "base station" is an example of a control device in the wireless communication system, having the full breadth of its usual meaning. For example, in addition to gNB and ng-eNB specified in the 5G communication standard, depending on the scenario to which the technical solution of the present disclosure is applied, "base station" may also be an eNB in the LTE communication system, a remote radio head, a wireless access point, a relay node, or a communication apparatus performing similar control functions, or an element thereof. Application examples of the base station will be described in subsequent chapters in detail. In addition, the term "UE" used in the present disclosure has the full breadth of its usual meaning, including various terminal devices or vehicle-mounted devices communicating with the base station. As an example, UE may be a terminal device such as a mobile phone, a laptop computer, a tablet computer, a vehicle-mounted communication device or the like, or an element thereof. Application examples of the UE will be described in subsequent chapters in detail.

The aggregation initiating node acquires raw data from the data source via its data interface, and transmits the data to the target node together with at least one aggregation cooperating node after possible data processing. Examples of the data source may include various types of data acquisition devices, such as a camera, a surveillance camera, a sensor, or the like. Optionally, examples of the data source may also include various data carriers, such as an optical disc, a magnetic disc, a semiconductor memory, or the like. In other words, the data to be transmitted can be either data captured in real time or near real time, or data stored in advance, which will be collectively referred to as "transmission data" hereinafter.

Although only two aggregation cooperating nodes, namely Aggregation Cooperating Node 1 and Aggregation Cooperating Node 2, are shown as example in FIG.1, the number of the aggregation cooperating nodes is not limited thereto. The aggregation initiating node and the aggregation cooperating node can communicate with their respective base stations (e.g., Base Station A, Base Station B, and Base Station C as shown in FIG.1). Depending on specific application scenarios, Base Station A, Base Station B, and Base Station C may be the same base station or different base stations; they may belong to the same mobile operator or different operators. User data transmitted to the base station may be routed to a desired destination via a public network.

According to embodiments of the present disclosure, the aggregation initiating node can divide transmission data into multiple portions based on transmission condition information from the transmission condition management server, for transmissions of itself and the aggregation cooperating node, respectively. In the context of the present disclosure, "transmission condition" refer to network factors that constrain the data transmission of each node, and can be characterized by various metrics. For example, the transmission condition information may include metrics reflecting a network state between a source (the aggregation initiating node or the aggregation cooperating node) and a destination (the aggregation server) of the transmission, such as average transmission rate, packet loss rate, end-to-end latency, or the like. For example, the transmission condition information may include information about transmission resources usable by the node, such as available bandwidth, wireless transmission resource blocks (RBs), or the like. However, the transmission condition information according to the present disclosure is not limited to those as listed, but may include other constraints that are commonly used.

The aggregation server aggregates the data portions originating from the aggregation initiating node and the aggregation cooperating nodes and transmitted via the respective base stations, so as to restore the transmission data, and forwards the aggregated data to the target node. Depending on specific application scenarios, the target node can be, for example, a director's studio, a cloud platform, a content server or the like, which will not be introduced here. According to embodiments of the present disclosure, the aggregation server and the transmission condition management server may be located at the target node, a public network, a core network of a wireless communication system (e.g., as network functions in the core network), a base station, or any other suitable place.

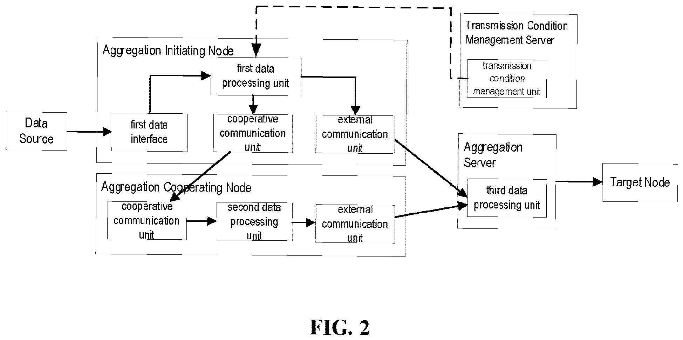

FIG.2 shows a block diagram of a configuration of the cooperative transmission system according to the present disclosure.

As shown inFIG.2, the aggregation initiating node may include a first data interface, a first data processing unit, a cooperative communication unit, and an external communication unit. The aggregation initiating node obtains raw data from a data source via its first data interface, such as a 4K/8K high-bitrate video stream, a sensor data stream, or the like. In one example, the first data interface may be implemented as a wired data interface connected to the data source, such as a universal serial bus (USB) interface, a serial advanced technology attachment (SATA) interface, an Ethernet interface, or the like. In another example, the first data interface may be implemented as a wireless data interface, such as a Bluetooth interface, a Wi-Fi interface, or the like.

The raw data received by the first data interface may be fetched to the first data processing unit for processing. Optionally, the first data processing unit may perform pre-processing on the raw data before transmission, including but not limited to image/video processing, format conversion, compression, encryption and the like, which will not be described in detail here.

Most importantly, according to embodiments of the present disclosure, the first data processing unit divides the data to be transmitted into a portion to be transmitted by the aggregation initiating node (hereinafter referred to as "first data portion") and a portion to be transmitted by the aggregation cooperating node (hereinafter referred to as "second data portion"). The division of the transmission data may be based on the transmission condition information from the transmission condition management server, such as network state information, transmission resource allocation information or the like. In one example, the first data portion and the second data portion may be disjoint subsets of the transmission data. In an alternative example, the first data portion and the second data portion may be divided as intersecting subsets that are partially overlapped, thereby obtaining a certain redundancy. Based on the transmission condition information, the first data processing unit may calculate a division ratio of the transmission data, and optionally transmission rates (a rate of transmission to the aggregation cooperating node and a upload rate from the aggregation cooperating node to the base station), by means of some optimization algorithm, such as a genetic algorithm, a machine learning algorithm, or a neural network. As a result of the division, the first data portion and at least one second data portion into which the transmission data is divided may have different sizes to adapt to the transmission condition of each of the nodes.

Optionally, the first data processing unit may also select one or more aggregation cooperating nodes for the cooperative transmission from a group of aggregation cooperating nodes that are willing to participate in the cooperation. For example, based on the transmission condition information of each of the aggregation cooperating nodes, the first data processing unit may select one, two or more aggregation cooperating nodes with the best transmission conditions. The selection of the aggregation cooperating node may also consider additional factors, such as the equipment capability and availability of the node, and the size of the transmitted data.

After the division by the first data processing unit, the first data processing unit may encapsulate the portions of the transmission data into packets, and add corresponding source addresses and destination addresses in headers of the packets. On the one hand, for the first data portion, the first data processing unit adds an IP address of the aggregation initiating node as the source address and IP addresses of the aggregation server and the target node as the destination address in the headers of the corresponding packets, and transmits it to the aggregation server via the external communication unit of the aggregation initiating node. The external communication unit may include a cellular network interface for communicating with a base station, and utilize uplink transmission resources scheduled by the base station to transmit the data to the base station, for example, via physical uplink shared channel (PUSCH). The base station forwards the received first data portion to the aggregation server according to the address information included in the packets.

On the other hand, the first data processing unit adds an IP address of the aggregation initiating node as the source address and an IP address of the aggregation cooperating node as the destination address in the headers of the packets of the second data portion, so that each second data portion is transmitted to the corresponding aggregation cooperation unit. The cooperative communication unit may include various wireless interfaces utilizing various device-to-device (D2D) communication technologies, such as a Wi-Fi (wifi-direct) interface, a Sidelink interface, a Bluetooth interface, or the like.

The aggregation initiating node receives a corresponding second data portion via its cooperative communication unit, and performs preprocessing prior to transmission by the second data processing unit. The second data processing unit changes the destination address of the packets of the received second data portion to the IP addresses of the aggregation server and the target node. Preferably, the second data processing unit also changes the source address of the packets of the second data portion to the IP address of the aggregation cooperating node. This is necessary when the aggregation cooperating node and the aggregation initiating node belong to different operators. For example, assuming that the aggregation initiating node belongs to Operator A, and the aggregation cooperating node belongs to Operator B. Then, for a packet forwarded by the aggregation initiating node to the aggregation cooperating node, its source IP address is the IP address of the aggregation initiating node by default, and this packet will be discarded when it reaches a base station of Operator B.

The aggregation cooperating node transmits the second data portion to the aggregation server via its external communication unit. Similar to the external communication unit of the aggregation initiating node, the external communication unit of the aggregation cooperating node may include a cellular network interface for communicating with the base station, and utilize uplink transmission resources scheduled by the base station for transmitting the data to the base station via PUSCH, for example. The base station forwards the received second data portion to the aggregation server according to the address information included in the packets.

The aggregation server receives the first data portion and the second data portion of the transmission data, and its third data processing unit may be configured as an aggregation processor for aggregating the packets to restore the transmission data. The third data processing unit may re-encapsulate the aggregated data, and use the IP address of the target node as the destination address in the header of the packets, thereby the aggregation server may forward the aggregated transmission data to the target node.

The transmission condition management server is used to acquire and manage the transmission condition information of the aggregation initiating node and the aggregation cooperating node, and provide the transmission condition information to the aggregation initiating node for use by the first data processing unit in dividing the transmission data.

In an example, the transmission condition management server may test the network state from each node to the aggregation server via its transmission condition management unit. Preferably, the transmission condition management server and the aggregation server may be located at the same location, in which case the transmission condition management server may detect an average transmission rate, end-to-end latency, packet loss rate or the like of each node by receiving a test packet from the node by itself. For example, in a pull mode, in response to a network state request from the aggregation initiating node, the transmission condition management server may send the network state information of the aggregation initiating node and the aggregation cooperating node to the aggregation initiating node. In a push mode, the transmission condition management server may actively push the network state information of the aggregation initiating node and the aggregation cooperating node to the aggregation initiating node. Alternatively, in either mode, the network state information of the aggregation initiating node may be sent directly to the aggregation initiating node by the transmission condition management server, while the network state information of the aggregation cooperating node may be sent to the aggregation cooperating node first, and then sent to the aggregation initiating node by the aggregation cooperating node.

In another example, the transmission condition management server may be configured as a scheduler for allocating transmission resources to each of the nodes. For example, the transmission condition management server may allocate uplink transmission resources for the aggregation initiating node and the aggregation cooperating node using a scheduling algorithm. Preferably, this resource allocation may be based on a wireless channel condition from each node to the base station. More transmission resources (e.g., resource blocks) may be allocated to a node with good channel quality, while fewer transmission resources may be allocated to a node with poor channel quality, which is conducive to improving resource utilization of the system. The transmission condition management server may send resource allocation information of the aggregation initiating node and the aggregation cooperating node to the aggregation initiating node.

It should be understood that the various units described above are only logically divided according to specific functions they implement, and are not used to limit the specific implementations. For example, in actual implementation, functions of multiple units may be implemented by one module, or a function of one unit may be implemented by multiple modules.

By using the cooperative transmission system according to the present disclosure, data can be cooperatively transmitted adaptively based on transmission conditions of multiple user equipments, and at least one upload backup link is provided, which is conducive to improving the transmission rate, reducing the data transmission latency, reducing the packet loss rate, and improving the stability of the transmission system.

The exemplary embodiments of the present disclosure will be described below with reference to the drawings. It should be understood that the following embodiments are merely illustrative, and are not intended to limit the present disclosure to the implementations that will be described in detail below.

[First Embodiment]

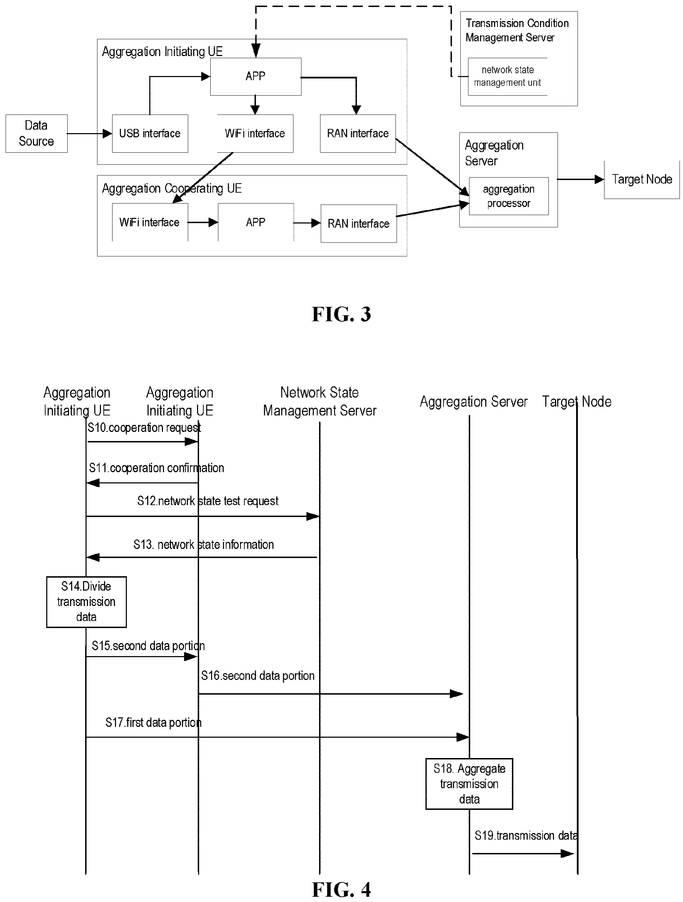

FIG. 3 illustrates a block diagram of an exemplary configuration of a cooperative transmission system according to a first embodiment of the present disclosure.

In FIG. 3, the aggregation initiating node and the aggregation cooperating node are illustrated as user equipments (UEs) such as mobile terminals. The first data interface of the aggregation initiating UE is implemented as a USB interface to receive data such as a real-time video stream. Cooperative communication units of the aggregation initiating UE and the aggregation cooperating UE are implemented as WiFi (e.g., wifi-direct) interfaces for inter-UE communication, and the external communication units are implemented as radio access network (RAN) interfaces for wireless communication with the base station.

According to the first embodiment of the present disclosure, the first data processing unit of the aggregation initiating UE is configured to operate at an application (APP) layer, and preferably may be implemented as an APP, which has or does not have an interface for interacting with the user. As shown in FIG. 3, the APP of the aggregation initiating UE may fetch data received via the USB interface to the application layer, and divide the transmission data based on network state information of the aggregation initiating UE and the aggregation cooperating UE in the application layer, encapsulate data packets, and add source addresses and destination addresses.

A flowchart that can be implemented by the cooperative transmission system in FIG. 3 according to the first embodiment will be described below with reference to FIG. 4. It should be understood that although one aggregation cooperating UE is illustrated in FIG. 4, the process may apply to a case with more aggregation cooperating UEs. In addition, it should be understood that the execution order of the steps in FIG. 4 is merely illustrative, the order of some steps may be reversed, or some steps may be executed in parallel.

The process may start with step S10, where the aggregation initiating UE sends a cooperation request message to the aggregation cooperating UE to inquire whether the aggregation cooperating UE is available to assist the aggregation initiating UE in transmitting data. If yes, in step S11, the aggregation cooperating UE may return a cooperation confirmation message to the aggregation initiating UE, wherein the cooperation confirmation message may include an IP address of the aggregation cooperating UE.

In step S12, the aggregation initiating UE makes a network state test request to the network state management server, the request including IP addresses of the aggregation initiating UE and the aggregation cooperating UE.

In step S13, in response to the network state test request of the aggregation initiating UE, the network state management server tests network states of the aggregation initiating node and the aggregation cooperating node according to the IP addresses in the request message, so as to obtain information including end-to-end latency, packet loss rate, transmission rate or the like. The network state test may use, for example, a ping method or any other method, as long as the desired information can be obtained.

As a response, the network state management server returns the obtained network state information of the aggregation initiating UE and the aggregation cooperating UE to the aggregation initiating UE. Alternatively, as described above with reference to FIG. 2, the network state management server may alternatively send the network state information of the aggregation initiating UE to the aggregation initiating UE, and send the network state information of the aggregation cooperating UE to the aggregation cooperating UE which then sends its network state information to the aggregation initiating UE via inter-UE communication.

In one example, the network state management server provides the network state information only once at the beginning of the cooperative transmission. In another example, during the cooperative transmission, the network state management server may update the network state periodically (e.g., every n (n≥1) IP packets), and feed back the updated network state information to the aggregation initiating UE, or update the network state according to transmission quality of the cooperative transmission (e.g., when the transmission quality falls below a predetermined threshold), thereby feeding back the updated network state information to the aggregation initiating UE aperiodically.

In step S14, the aggregation initiating UE (e.g., via its APP) divides the transmission data based on the received network state information of the aggregation initiating UE and the aggregation cooperating UE. The division of the transmission data can utilize, for example, a genetic algorithm, a machine learning algorithm, a neural network or the like, so that an amount of data to be transmitted by the aggregation initiating UE (the first data portion) and an amount of data to be transmitted by the aggregation cooperating UE (the second data portion) are adapted to the network states of the respective UEs.

Optionally, the aggregation initiating UE may also select one or more aggregation cooperating UEs suitable for the cooperative transmission from a set of aggregation cooperating UEs based on the network state information.

Subsequently, in step S15, the aggregation initiating UE (e.g., via a Wi-Fi interface) transmits the second data portion to the aggregation cooperating UE. In step S16, the aggregation cooperating UE (e.g., via its APP) replaces the source address with the IP address of the aggregation cooperating UE and the destination address with the IP addresses of the aggregation server and the target node in the packets of the second data portion, and transmits the second data portion to a base station (e.g., via its RAN interface) for transmission to the aggregation server.

In step S17, the aggregation initiating UE (e.g., via its APP) adds the IP address of the aggregation initiating UE as the source address and the IP addresses of the aggregation server and the target node as the destination address in the packets of the first data portion, and transmits the first data portion to a base station (e.g., via its RAN interface) for transmission to the aggregation server.

In step S18, the aggregation server (e.g., via its aggregation processor) aggregates the received first data portion and second data portion to restore the transmission data. Subsequently, in step S19, the aggregation server forwards the aggregated transmission data to the target node for use by the target node.

According to the first embodiment of the present disclosure, the division and encapsulation of the transmission data can be performed at the application layer for transmission by the Wi-Fi interface and the RAN interface, and therefore the cooperative transmission of multiple user equipments can be easily implemented by merely developing the corresponding APP.

[Second Embodiment]

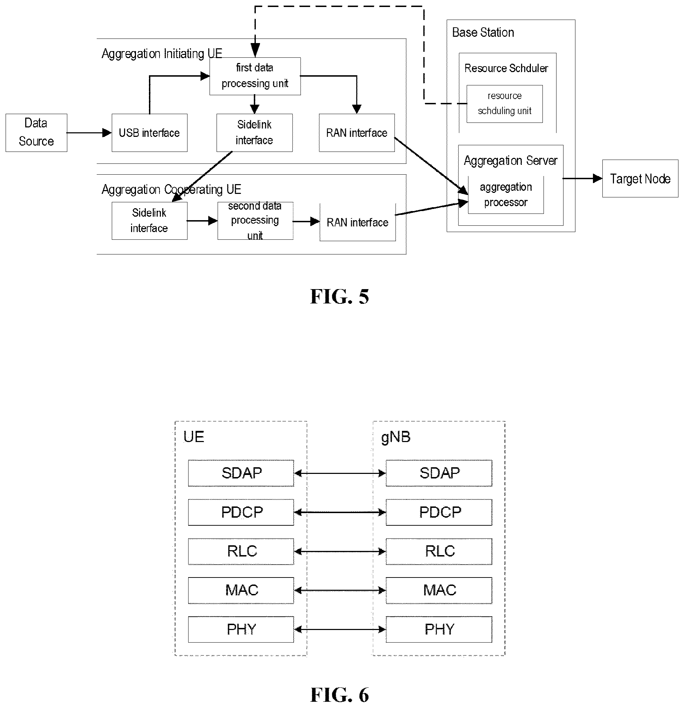

FIG. 5 illustrates a block diagram of an exemplary configuration of the cooperative transmission system according to a second embodiment of the present disclosure.

In FIG. 5, the aggregation initiating node and the aggregation cooperating node are illustrated as user equipments (UEs) such as mobile terminals. The first data interface of the aggregation initiating UE is implemented as, for example, a USB interface to receive data such as a real-time video stream, and the external communication units of the aggregation initiating UE and the aggregation cooperating UE are implemented as, for example, RAN interfaces for wireless communication with the base station.

Although the aggregation server and the transmission condition management server are illustrated as being implemented in the base station in FIG. 5, the second embodiment of the present disclosure is not limited thereto. That is, the aggregation server and the transmission condition management server may be alternatively located at the target node, a public network, a core network of the wireless communication system (e.g., as network functions in the core network), or any other suitable place.

Unlike the cooperative transmission system shown in FIG. 3, in the cooperative transmission system according to the second embodiment as shown in FIG. 5, the cooperative communication units of the aggregation initiating UE and the aggregation cooperating UE are implemented as Sidelink interfaces for inter-UE communication. Both of the RAN interface and the Sidelink interface may comply with air interface specifications such as the 5G NR, and it can be contemplated to implement the division, encapsulation and transmission of the transmission data at an access network (AN) protocol layer. Therefore, the cooperative transmission according to the second embodiment of the present disclosure can be implemented by underlying chips of the mobile terminals without going through the application layer, thereby reducing processing latency.

As used herein, "access network protocol layer" represents a radio protocol stack of an access network and depends on a specific type of the access network. If accessing from an eNB, the corresponding radio protocol stack is defined in TS36.300, and if accessing from a gNodeB, the corresponding radio protocol is defined in TS38.300. FIG. 6 illustrates an NR radio protocol stack for user planes of a UE and a base station. The access network protocol layer includes a physical (PHY) layer in Layer 1, and a medium access control (MAC) sublayer, a radio link control (RLC) sublayer, a packet data convergence protocol (PDCP) sublayer and a service data adaptation protocol (SDAP) sublayer in Layer 2. The physical layer is the lowest layer, and is used to implement various physical-layer signal processing to provide transparent transmission function for signals. Layer 2 (L2) is above the physical layer and is responsible for managing wireless links between the UE and the base station. The relationship among the sublayers of L2 lies in that: the physical layer provides a transport channel to the MAC sublayer, the MAC sublayer provides a logical channel to the RLC sublayer, the RLC sublayer provides a RLC channel to the PDCP sublayer, and the PDCP sublayer provides a radio bearer to the SDAP sublayer.

In particular, the SDAP sublayer is a new protocol layer added to the user plane in the 5G NR. The NR core network introduces a finer-grained user plane data processing mechanism based on quality of service (QoS) flows. From the perspective of air interface, data is carried on the basis of a data radio bearer (DRB). At this time, it is necessary to map data of different QoS flows to different DRBs according to rules configured by the network. Main services and functions of the SDAP sublayer include: mapping between QoS flow and data radio bearer; and marking QoS flow ID (QFI) in uplink and downlink packets. One or more QoS flows can be mapped to the same DRB, and one QoS flow is usually only mapped to one DRB. According to an exemplary embodiment of the present disclosure, the division of data to be transmitted by different UEs can be implemented at the SDAP layer. However, embodiments of the present disclosure are not limited thereto, and the division of the transmission data may also take place at another protocol layer below the application layer, for example, another sublayer of the access network protocol layer, or another protocol layer newly added in future.

Typically, transmission conditions of data may be mainly constrained by wireless channel part. According to the second embodiment of the present disclosure, the division of the transmission data can be performed by mainly considering transmission condition of the wireless channel from the UE for cooperative transmission to the base station. As described above, the transmission condition may include a transmission rate, jitter, latency of the like of the wireless channel. Additionally or alternatively, according to the second embodiment of the present disclosure, the transmission conditions may include allocation of wireless transmission resources.

As shown in the exemplary arrangement of FIG. 5, the transmission condition management server according to the second embodiment may be configured as a resource scheduler for managing allocation of transmission resources for the aggregation initiating UE and the aggregation cooperating UE, and is deployed in the base station with the aggregation server.

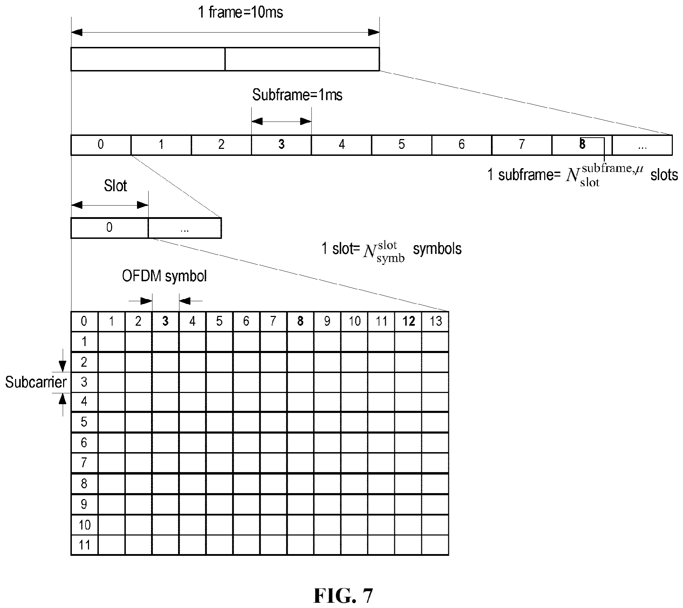

In the 5G NR, downlink (DL), uplink (UL) and sidelink (SL) transmissions are all organized into frames. FIG. 7 illustrates a schematic diagram of a frame structure in a 5G communication system. As a fixed framework compatible with the LTE/LTE-A, a frame in the NR also has a length of 10 ms and includes 10 subframes of equal size, each subframe being of 1 ms. Unlike the LTE/LTE-A, the frame structure in the NR has a flexible framework depending on a subcarrier spacing. Each subframe has a configurable number $N_{slot}^{subframe,\mu}$ of slots, for example, 1, 2, 4, 8 or 16. Each slot also has a configurable number $N_{symb}^{slot}$ of OFDM symbols. For a normal cyclic prefix, each slot contains 14 consecutive OFDM symbols, and for an extended cyclic prefix, each slot includes 12 consecutive OFDM symbols. In the frequency-domain dimension, each slot includes several resource blocks (RBs), and each resource block contains 12 consecutive subcarriers in the frequency domain. Thus, resource elements (REs) in a slot can be represented using a resource grid as shown in FIG. 7. Resource blocks available for uplink/downlink transmission may be divided into a data segment and a control segment. Resource elements in the control segment may be allocated for transmitting control information. The data segment may include all resource elements not included in the control segment for transmitting data to the UE or base station.

Scheduling of time-domain resources may adopt multiple granularities, such as a single slot, multiple consecutive slots (also referred to as an aggregated slot) or partial OFDM symbols within a single slot (also referred to as a mini-slot). Scheduling of frequency-domain resources is generally performed in units of RBs, which can be classified into different types according to whether the scheduled RBs are contiguous or not.

The base station can indicate time-frequency transmission resources scheduled for an uplink transmission by sending a DCI via physical downlink control channel (PDCCH). The base station can schedule transmission resources for the UE in each transmission time interval (TTI). Such scheduling method is called Dynamic Grant (DG). To save PDCCH resources, the base station may also adopt a non-dynamic scheduling method, by sending a periodically valid scheduling command to the UE and thus allocating transmission resources to the UE periodically. For PUSCH transmission, the base station can configure an uplink grant (UL grant) for the UE by using Configured Grant (CG) to indicate periodic uplink transmission resources usable by the UE. There are two types of CG: CG Type 1, in which the UE can directly upload data using configured resources without DCI activation; and CG Type 2, in which an uplink configured grant needs to be activated by the base station before the UE uses configured resources.

Therefore, according to the second embodiment, three modes of physical resource allocation by the base station for the aggregated initiating UE and the aggregated cooperating UE are considered:

-static mode: the base station pre-configures the uplink resources of the UE, and the transmission resources can be used directly after being allocated to each UE;

-semi-static mode: the base station pre-configures the uplink resources of the UE, and if the UE requests an uplink transmission, the base station will send an activation command to activate the uplink configured grant;

-dynamic mode: for each uplink transmission, the UE needs to request an UL dynamic grant, and can use the corresponding transmission resources only after being authorized.

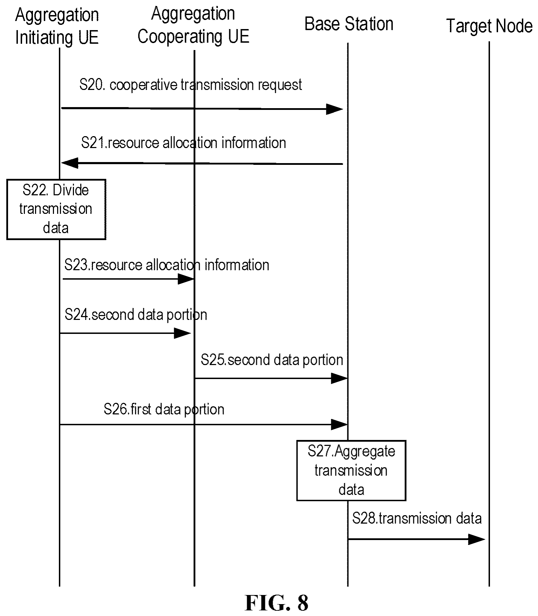

FIG.8 illustrates a flowchart that can be implemented by the cooperative transmission system shown in FIG.5 under the static scheduling mode. The process starts with step S20, where the aggregation initiating UE transmits a cooperative transmission request to the base station. This request can be identified by one bit in an uplink control information (UCI) carried on PUSCH or PUCCH, for example, "1" indicates that cooperative transmission is required, and "0" indicates that cooperative transmission is not required.

In step S21, the base station (e.g., via its resource scheduler) allocates uplink transmission resources for the aggregation initiating UE and the aggregation cooperating UE. Preferably, the resource scheduling may be based on channel conditions of the aggregation initiating UE and the aggregation cooperating UE. The base station sends resource allocation information to the aggregation initiating UE, wherein the resource allocation information includes not only available resource blocks (RBs) of the aggregation initiating UE but also available RBs of the aggregation cooperating UE as well as corresponding UE identifiers. The resource allocation information can be sent to the aggregation initiating UE via PDCCH in the form of CG Type1.

In step S22, the aggregation initiating UE (e.g., via its first data processing unit) divides transmission data into a first data portion and a second data portion according to the resource allocation information (available RBs) of the aggregation initiating UE and the aggregation cooperating UE. Optionally, the aggregation initiating UE may also select at least one aggregation cooperating UE suitable for the cooperative transmission from a set of aggregation cooperating UEs according to their resource allocation information.

In step S23, the aggregation initiating UE (e.g., via its Sidelink interface) sends the resource allocation information of the aggregation cooperating UE to the corresponding aggregation cooperating UE. This can be implemented, for example, by sending a Sidelink control information (SCI).

In step S24, the aggregation initiating UE (e.g., via its Sidelink interface) transmits the divided second data portion to the corresponding aggregation cooperating UE, and in step S25, the aggregation cooperating UE (e.g., via its second data processing unit) adds an IP address of the aggregation cooperating UE as the source address and IP addresses of the aggregation server and the target node as the destination address in the packets of the second data portion, and transmits the second data portion to the base station (e.g., via its RAN interface) for transmission to the aggregation server.

In step S26, the aggregation initiating UE (e.g., via its first data processing unit) adds an IP address of the aggregation initiating UE as the source address and IP addresses of the aggregation server and the target node as the destination address in the packets of the first data portion, and transmits the first data portion to the base station (e.g., via its RAN interface) for transmission to the aggregation server.

In step S27, the aggregation server (e.g., via its aggregation processor) aggregates the received first data portion and second data portion to restore the transmission data. Subsequently, in step S28, the aggregation server forwards the aggregated transmission data to the target node for use by the target node.

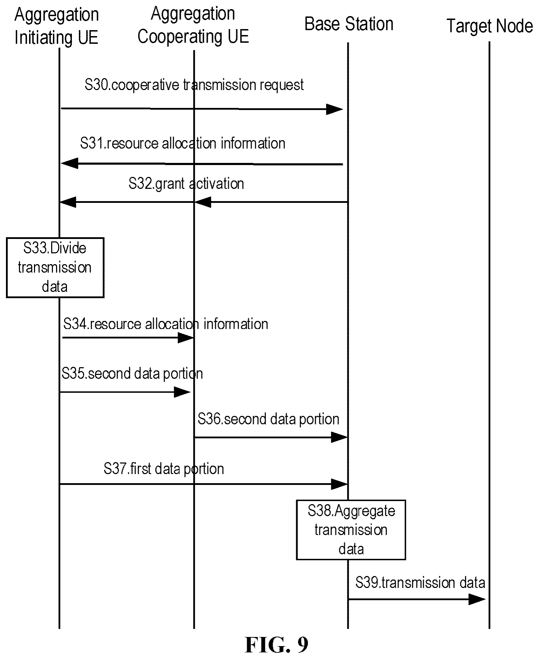

FIG.9 shows a flowchart that can be implemented by the cooperative transmission system shown in FIG.5 under the semi-static scheduling mode. The process starts with step S30, where the aggregation initiating UE sends a cooperative transmission request to the base station. This request can be identified by one bit in an uplink control information (UCI) carried on PUSCH or PUCCH, for example, "1" indicates that cooperative transmission is required, and "0" indicates that cooperative transmission is not required.

In step S31, the base station (e.g., via its resource scheduler) allocates uplink transmission resources for the aggregation initiating UE and the aggregation cooperating UE. Preferably, the resource scheduling can be based on channel conditions of the aggregation initiating UE and the aggregation cooperating UE. The base station sends the resource allocation information to the aggregation initiating UE, wherein the resource allocation information includes not only available resource blocks (RBs) of the aggregation initiating UE but also available RBs of the aggregation cooperating UE as well as corresponding UE identifiers. The resource allocation information may be sent to the aggregation initiating UE via PDCCH in the form of CG Type 2.

In step S32, the base station sends activation commands corresponding to uplink configuration grants to the aggregation initiating UE and the aggregation cooperating UE, respectively, so that the UE can use pre-configured transmission resources for PUSCH transmission.

In step S33, the aggregation initiating UE (e.g., via its first data processing unit) divides transmission data into a first data portion and a second data portion according to the resource allocation information (available RBs) of the aggregation initiating UE and the aggregation cooperating UE. Optionally, the aggregation initiating UE may also select at least one aggregation cooperating UE suitable for the cooperative transmission from a set of aggregation cooperating UEs according to their resource allocation information.

In step S34, the aggregation initiating UE (e.g., via its Sidelink interface) sends the resource allocation information of the aggregation cooperating UE to the corresponding aggregation cooperating UE. This may be implemented, for example, by sending a Sidelink control information (SCI).

In step S35, the aggregation initiating UE (e.g., via its sidelink interface) transmits the divided second data portion to corresponding aggregation cooperating UE, and in step S36, the aggregation cooperating UE (e.g., via its second data processing unit) replaces the source address with an IP address of the aggregation cooperating UE and the destination address with IP addresses of the aggregation server and the target node in the packets of the second data portion, and transmits the second data portion to the base station (e.g., via its RAN interface) for transmission to the aggregation server.

In step S37, the aggregation initiating UE (e.g., via its first data processing unit) adds an IP address of the aggregation initiating UE as the source address and IP addresses of the aggregation server and the target node as the destination address in the packets of the first data portion, and transmits the first data portion to the base station (e.g., via its RAN interface) for transmission to the aggregation server.

In step S38, the aggregation server (e.g., via its aggregation processor) aggregates the received first data portion and second data portion to restore the transmission data. Subsequently, in step S39, the aggregation server forwards the aggregated transmission data to the target node for use by the target node.

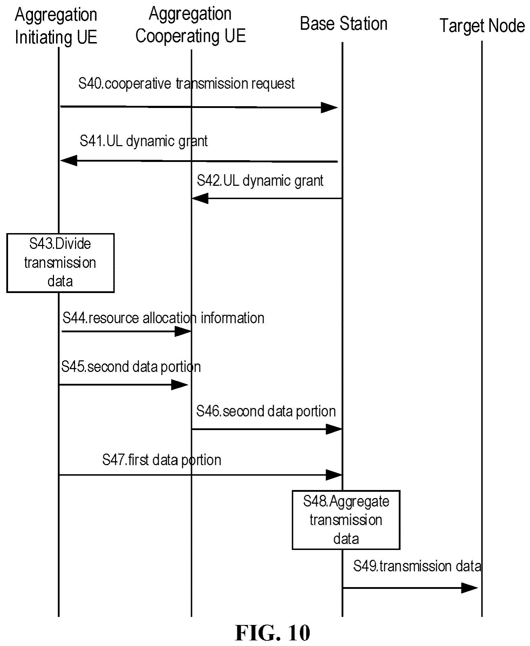

FIG. 10 illustrates a flowchart that can be implemented by the cooperative transmission system shown in FIG. 5 under the dynamic scheduling mode. The process starts with step S40, where the aggregation initiating UE sends a cooperative transmission request to the base station. The request may be identified by one bit in an uplink control information (UCI) carried on PUSCH or PUCCH, for example, "1" indicates that cooperative transmission is required, and "0" indicates that cooperative transmission is not required.

The base station (e.g., via its resource scheduler) allocates uplink transmission resources for the aggregation initiating UE and the aggregation cooperating UE. Preferably, the resource scheduling can be based on channel conditions of the aggregation initiating UE and the aggregation cooperating UE. In step S41, the base station sends resource allocation information including UL dynamic grants of the aggregation initiating UE and the aggregation cooperating UE to the aggregation initiating UE via PDCCH, wherein the resource allocation information includes not only available resource blocks (RBs) of the aggregation initiating UE but also available RBs of the aggregation cooperating UE as well as corresponding UE identifiers. In step S42, the base station also sends an UL dynamic grant for the aggregation cooperating UE to the aggregation cooperating UE via PDCCH.

In step S43, the aggregation initiating UE (e.g., via its first data processing unit) divides the transmission data into a first data portion and a second data portion according to the resource allocation information (available RBs) of the aggregation initiating UE and the aggregation cooperating UE. Optionally, the aggregation initiating UE may select at least one aggregation cooperating UE suitable for the cooperative transmission from a set of aggregation cooperating UEs according to their resource allocation information.

In step S44, the aggregation initiating UE (e.g., via its Sidelink interface) sends the resource allocation information of the aggregation cooperating UE to corresponding aggregation cooperating UE. This can be implemented, for example, by sending sidelink control information (SCI).

In step S45, the aggregation initiating UE (e.g., via its sidelink interface) transmits the divided second data portion to the corresponding aggregation cooperating UE, and in step S46, the aggregation cooperating UE (e.g., via its second data processing unit) replaces the source address with an IP address of the aggregation cooperating UE and the destination address with IP addresses of the aggregation server and the target node in packets of the second data portion, and transmits the second data portion to the base station (e.g., via its RAN interface) for transmission to the aggregation server.

In step S47, the aggregation initiating UE (e.g., via its first data processing unit) adds an IP address of the aggregation initiating UE as the source address and IP addresses of the aggregation server and the target node as the destination address in packets of the first data portion, and transmits the first data portion to the base station (e.g., via its RAN interface) for transmission to the aggregation server.

In step S48, the aggregation server (e.g., via its aggregation processor) aggregates the received first data portion and second data portion to restore the transmission data. Subsequently, in step S49, the aggregation server forwards the aggregated transmission data to the target node for use by the target node.

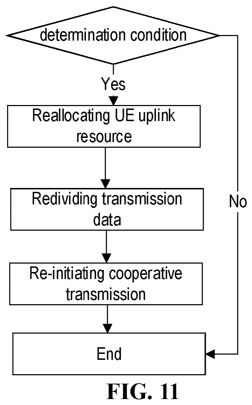

The transmission condition (e.g., channel condition) of the UE participating in the cooperative transmission may change. In this case, adjustments can be made accordingly depending on different scenarios and requirements. FIG. 11 illustrates an exemplary flowchart for adjusting the cooperative transmission. First, the base station determines whether it is necessary to reallocate uplink resources for the UE. The determination condition may include: 1) the data reception quality does not meet a predetermined requirement, e.g., if the number of retransmissions is greater than a threshold, then the data reception quality is considered to be poor, and it is necessary to reallocate uplink resources to the UE; or 2) reallocating the uplink resources to the UE in accordance with a predetermined time period. In some scenarios, a relative position between the aggregation initiating UE and the aggregation cooperating UE remains basically unchanged, so the change in channel quality is also small and the base station can maintain stable data reception quality, and thus the uplink resources do not need to be reallocated.

If the base station determines that it is necessary to reallocate the uplink resources, resource allocation information of the rescheduling can be sent to the aggregation initiating UE in the above three scheduling modes, so that the aggregation initiating UE can redivide the transmission data based on the updated resource allocation information. Subsequently, referring to the processes described in FIGS. 8-10, the aggregation initiating UE and the aggregation cooperating UE can start transmitting the redivided data portions, which will not be repeated here.

According to the second embodiment of the present disclosure, the multi-user cooperative transmission can be implemented at the lower layer based on transmission conditions, which is conducive to reducing the processing latency caused by application-layer processing.

According to the exemplary embodiments of the present disclosure, the above process can be implemented as a computer software program or on a computer-readable storage medium. For example, embodiments of the present disclosure include a computer program product, the computer program product including a computer program tangibly embodied on a machine-readable medium, the computer program including program codes for performing the method. In such embodiments, the computer program can be downloaded and installed from a network via a communication unit, and/or installed from removable media.

Generally speaking, various exemplary embodiments of the present disclosure can be implemented in hardware or dedicated circuits (e.g., control circuits), software, logic, or any combination thereof. For example, the units discussed above can be executed by a control circuit (e.g., CPU combined with other components), so the control circuit can perform actions described in the present disclosure. Some aspects can be implemented in hardware, while other aspects can be implemented in firmware or software that can be executed by a controller, microprocessor, or other computing device (e.g., control circuit). Although aspects of exemplary embodiments of the present disclosure are shown and described as block diagrams, flowcharts, or using some other pictorial representation, it can be understood that the modules, devices, systems, techniques, or methods described herein can be implemented as hardware, software, firmware, dedicated circuit or logic, general-purpose hardware or controller or other computing device, or some combination thereof.

Furthermore, various blocks shown in the flowchart can be regarded as method steps and/or operations generated by the operation of computer program code, and/or multiple coupled logic circuit components constructed to perform (multiple) related functions. For example, the embodiments of the present disclosure include a computer program product, which comprises a computer program tangibly embodied on a machine-readable medium, and the computer program contains program code configured to perform the above-mentioned method.

In the context of the present disclosure, a machine-readable medium may be any tangible medium that may contain or store programs used by or in combination with those used by an instruction execution system, device or equipment. The machine-readable medium may be a machine-readable signal medium or machine-readable storage medium. The machine-readable media can be non-transitory and may include, but not be limited to, electronic, magnetic, optical, electromagnetic, infrared or semiconductor systems, devices or equipment, or any appropriate combination of the above. More specific examples of the machine-readable storage medium will include electrical connections with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, and a magnetic storage device or any appropriate combination of the above.

[Exemplary implementations of the present disclosure]

According to the embodiments of the present disclosure, various implementations for practicing concepts of the present disclosure can be conceived, including but not limited to:

1). An electronic device for an aggregation initiating user equipment (UE), comprising:

processing circuitry configured to
obtain transmission condition information of the aggregation initiating UE and at least one aggregation cooperating UE;
based on the obtained transmission condition information, divide transmission data into a first data portion to be transmitted by the aggregation initiating UE and at least one second data portion to be transmitted respectively by the at least one aggregation cooperating UE;
transmit the first data portion to an aggregation server via a base station; and
transmit the at least one second data portion to the at least one aggregation cooperating UE, respectively, for the aggregation cooperating UE to transmit respective second data portion to the aggregation server via the base station, wherein the first data portion and the at least one second data portion are aggregated and transmitted to a target node by the aggregation server.

2). The electronic device according to 1), wherein the transmission condition information comprises network state information of the aggregation initiating UE and the at least one aggregation cooperating UE detected by a network state management server.

3). The electronic device according to 2), wherein the processing circuitry is further configured to:

a) send a network state request including IP addresses of the aggregation initiating UE and the at least one aggregation cooperating UE to the network state management server, and as a response to the network state request, receive the network state information tested based on the IP address of each of the UEs from the network state management server; or
b) receive the network state information of the aggregation initiating UE pushed by the network state management server, and receive, from the at least one aggregation cooperating UE, the network state information pushed by the network state management server to respective aggregation cooperating UE.

4). The electronic device according to 2), wherein the network state information includes at least one of average transmission rate, packet loss rate and end-to-end latency.

5). The electronic device according to 1), wherein the aggregation server is implemented at any of the target node, the base station, a public network, or a core network of a wireless communication system.

6). The electronic device according to 1), wherein the transmission condition information includes resource allocation information received from the base station, the resource allocation information indicating resource blocks (RB) allocated by the base station for the aggregation initiating UE and the at least one aggregation cooperating UE respectively and associated UE identifiers, and wherein the processing circuitry is further configured to:

divide the transmission data based on the RBs usable by the aggregation initiating UE and the at least one aggregation cooperating UE.

7). The electronic device according to 6), wherein the processing circuitry is further configured to:

send, to the base station and via uplink control information (UCI), a cooperation request indicating cooperative transmission is required; and as a response to the cooperation request, receive the resource allocation information scheduled by the base station based on channel conditions of the aggregation initiating UE and the at least one aggregation cooperating UE.

8). The electronic device according to 6), wherein the processing circuitry is further configured to transmit respective second data portion and resource allocation information to each of the at least one aggregation cooperating UE over Sidelink.

9). The electronic device according to 6), where the resource allocation information includes uplink configured grant or uplink dynamic grant.

10). The electronic device according to 7), wherein the dividing is performed at an application layer or a service data adaptation protocol (SDAP) layer.

11). The electronic device according to 1), wherein the processing circuitry is further configured to:

send a cooperative transmission request to the at least one aggregation cooperating UE; and receive, from the at least one aggregation cooperating UE, a cooperation confirmation message which indicates that corresponding aggregation cooperating UE is available for cooperative transmission and includes an IP address of the aggregation cooperating UE.

12). The electronic device according to 1), wherein the processing circuitry is further configured to:

receive the transmission condition information of a set of aggregation cooperating UEs from the base station; and based on the received transmission condition information, select the at least one aggregation cooperating UE from the set of aggregation cooperating UEs.

13). An electronic device for an aggregation cooperating user equipment (UE), comprising:
processing circuitry configured to:

receive a second data portion of transmission data from an aggregation initiating UE, wherein the transmission data was divided, based on transmission condition information of the aggregation initiating UE and at least one aggregation cooperating UE, into a first data portion to be transmitted to an aggregation server by the aggregation initiating UE and at least one second data portion to be transmitted to the aggregation server by the at least one aggregation cooperating UE; and
transmit the second data portion to the aggregation server via a base station, wherein the first data portion and the at least one second data portion are aggregated and transmitted to a target node by the aggregation server.

14). The electronic device according to 13), wherein the transmission condition information includes network state information detected by a network state management server.

15). The electronic device according to 14), wherein the aggregation server is implemented at any of the target node, the base station, a public network, or a core network of a wireless communication system.

16). The electronic device according to 15), wherein the transmission condition information includes resource allocation information, the resource allocation information indicating resource blocks (RBs) allocated by the base station for the aggregated initiating UE and the at least one aggregation cooperating UE respectively and associated UE identifiers, and wherein the processing circuitry is further configured to:
receive corresponding resource allocation information from the aggregation initiating UE.

17). The electronic device according to 13), wherein the processing circuitry is further configured to:

receive a cooperative transmission request from the aggregation initiating UE; and send, to the aggregation initiating UE, a cooperation confirmation message which indicates that the aggregation cooperating UE is available for cooperative transmission and includes an IP address of the aggregation cooperating UE.

18). The electronic device according 13), wherein the processing circuitry is further configured to:
add an IP address of the aggregation cooperating UE as a source address and IP addresses of the aggregation server and the target node as a destination address in the received second data portion.

19). An electronic device for a base station, comprising:
processing circuitry configured to:

send, to an aggregation initiating user equipment (UE), resource allocation information for the aggregation initiating UE and at least one aggregation cooperating UE;

receive a first data portion and at least one second data portion of transmission data from the aggregation initiating UE and the at least one aggregation cooperating UE, respectively, wherein the first data portion and the at least one second data portion of the transmission data were divided by the aggregation initiating UE based on the resource allocation information; and

aggregate the first data portion and the at least one second data portion and transmit aggregated data to a target node.

20). The electronic device according to 19), wherein the processing circuitry is further configured to:

receive, from the aggregation initiating UE and via uplink control information (UCI), a cooperation request indicating that cooperative transmission is required; and

based on channel conditions of the aggregated initiating UE and at least one aggregated cooperating UE, allocate transmission resources for each of the UEs.

21). The electronic device according to 19), wherein the resource allocation information includes uplink configured grant or uplink dynamic grant.

22). The electronic device according to 19), wherein the processing circuitry is further configured to:
in response to data reception quality not meeting a predetermined requirement or in accordance with a time period, reallocation resources for at least one of the aggregation initiating UE and the at least one aggregation cooperating UE.

23). A communication method, comprising:

obtaining transmission condition information of an aggregation initiating UE and at least one aggregation cooperating UE;

based on the obtained transmission condition information, dividing transmission data into a first data portion to be transmitted by the aggregation initiating UE and at least one second data portion to be transmitted respectively by the at least one aggregation cooperating UE;

transmitting the first data portion to an aggregation server via a base station; and

transmitting the at least one second data portion to the at least one aggregation cooperating UE, respectively, for the aggregation cooperating UE to transmit respective second data portion to the aggregation server via the base station,

wherein the first data portion and the at least one second data portion are aggregated and transmitted to a target node by the aggregation server.

24). A communication method, comprising:

receiving a second data portion of transmission data from an aggregation initiating UE, wherein the transmission data was divided, based on transmission condition information of the aggregation initiating UE and at least one aggregation cooperating UE, into a first data portion to be transmitted to an aggregation server by the aggregation initiating UE and at least one second data portion to be transmitted to the aggregation server by the at least one aggregation cooperating UE; and

transmitting the second data portion to the aggregation server via a base station,

wherein the first data portion and the at least one second data portion are aggregated and transmitted to a target node by the aggregation server.

25). A communication method, comprising:

sending, to an aggregation initiating user equipment (UE), resource allocation information for the aggregation initiating UE and at least one aggregation cooperating UE;

receiving a first data portion and at least one second data portion of transmission data from the aggregation initiating UE and the at least one aggregation cooperating UE, respectively, wherein the first data portion and the at least one second data portion of the transmission data were divided by the aggregation initiating UE based on the resource allocation information; and

aggregating the first data portion and the at least one second data portion and transmit aggregated data to a target node.

26). A computer-readable storage medium including executable instructions which, when executed, perform the communication method according to any of 23)-25).

[Application examples of the present disclosure]

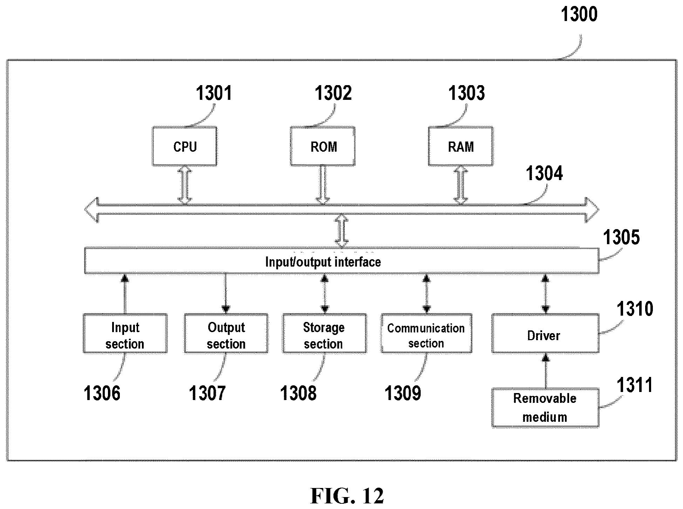

FIG. 12 illustrates an example block diagram of a computer that can be implemented as a terminal device or a control device according to the embodiments of the present disclosure.
In FIG. 12, a central processing unit (CPU) 1301 performs various processing based on programs stored in a Read-Only Memory (ROM) 1302 or programs loaded into a Random Access Memory (RAM) 1303 from a storage section 1308. Data required by CPU 1301 for performing various processing, and so forth, is also stored in RAM 1303 as needed.

CPU 1301, ROM 1302, and RAM 1303 are interconnected via a bus 1304. An input/output interface 1305 is also connected to bus 1304.

The following components are connected to the input/output interface 1305: an input section 1306 including a keyboard, a mouse and so forth; an output section 1307 including a display such as a cathode ray tube (CRT), a liquid crystal display (LCD) or the like, and a speaker, and so forth; a storage section 1308 including a hard disk and the like; and a communication section 1309 including network interface cards such as a LAN card or a modem, or the like. The communication section 1309 performs communication processing via networks such as the Internet.

As needed, a driver 1310 is also connected to the input/output interface 1305. A removable medium 1311, such as a magnetic disk, optical disk, magneto-optical disk, semiconductor memory, etc., is mounted on the driver 1310 as needed, enabling computer programs read from the removable medium 1311 to be installed in the storage section 1308 as needed.

When the above series of processing is implemented by software, the programs constituting the software are installed from a network such as the Internet or a storage medium such as the removable medium 1311.

It should be understood by those skilled in the art that such a storage medium is not limited to the removable medium 1311 shown in FIG. 12, which stores a program and is distributed separately from a device to provide the programs to a user. Examples of the removable medium 1311 include magnetic disks (including floppy disks (registered trademark)), optical disks (including compact disc read-only memory (CD-ROM) and digital versatile discs (DVD)), magneto-optical disks (including mini-discs (MD) (registered trademark)), and semiconductor memory. Alternatively, the storage medium can be the ROM 1302, hard disk included in the storage section 1308, and so forth, in which programs are stored and distributed to users along with the device containing them.

The technology of the present disclosure can be applied to various products.

For example, the electronic device according to the embodiments of the present disclosure can be implemented as or installed in a variety of base stations, or can be implemented as or installed in a variety of user devices.

The communication methods according to the embodiments of the present disclosure may be implemented by various base stations or user devices; the methods and operations according to the embodiments of the present disclosure may be embodied as computer-executable instructions, stored in a non-transitory computer-readable storage medium, and can be performed by various base stations or user devices to implement one or more of the above-mentioned functions.

The technology according to the embodiments of the present disclosure can be made into various computer program products, which can be used in various base stations or user devices to implement one or more of the above-mentioned functions.

The base stations mentioned in the present disclosure can be implemented as any type of base stations, preferably, such as macro gNB or ng-eNB defined in the 3GPP 5G NR standard. A gNB may be a gNB that covers a cell smaller than a macro cell, such as a pico gNB, a micro gNB, and a home (femto) gNB. Instead, the base station may be implemented as any other types of base stations such as a NodeB, an eNodeB and a base transceiver station (BTS). The base station may include a main body configured to control wireless communication, and one or more remote radio heads (RRH), a wireless relay, a drone control tower, a control node in an automated factory or the like disposed in a different place from the main body.

The user device may be implemented as a mobile terminal such as a smartphone, a tablet personal computer (PC), a notebook PC, a portable game terminal, a portable/dongle type mobile router, and a digital camera apparatus, or an in-vehicle terminal such as a car navigation device. The user device may also be implemented as a terminal (that is also referred to as a machine type communication (MTC) terminal) that performs machine-to-machine (M2M) communication, a drone, a sensor or actuator in an automated factory or the like. Furthermore, the user device may be a wireless communication module (such as an integrated circuit module including a single die) mounted on each of the above terminals.

First application example of base station

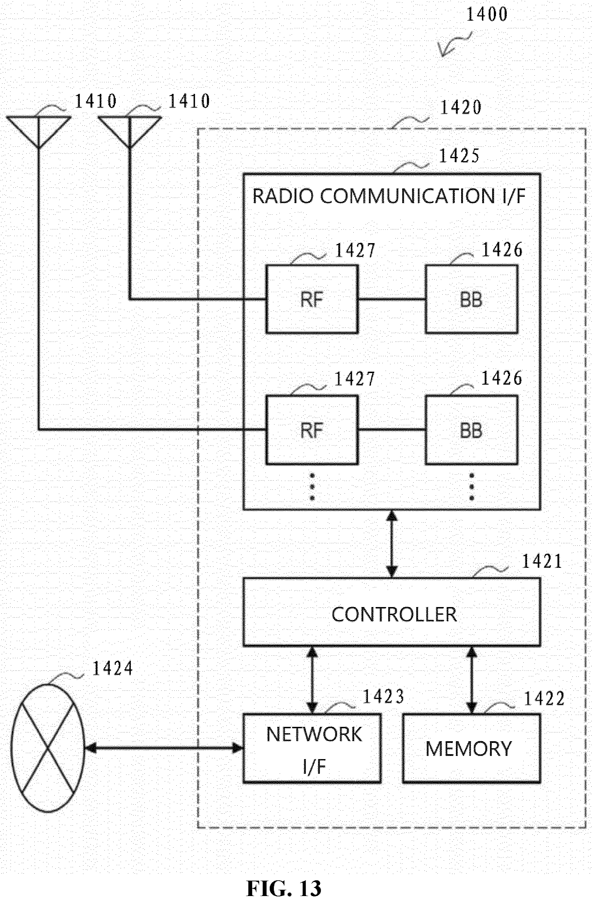

FIG. 13 is a block diagram showing a first example of a schematic configuration of a base station to which the technology of the present disclosure can be applied. In FIG. 13, the base station is implemented as gNB 1400. The gNB 1400 includes a plurality of antennas 1410 and a base station device 1420. The base station device 1420 and each antenna 1410 may be connected to each other via an RF cable. In an implementation, the gNB 1400 (or the base station device 1420) herein may correspond to the base station described in above embodiments.

The antennas 1410 includes multiple antenna elements. The antennas 1410, for example, can be arranged into a matrix of antenna arrays, and are used by the base station device 1420 to transmit and receive wireless signals. For example, multiple antennas 1410 may be compatible with multiple frequency bands used by gNB 1400.

The base station device 1420 includes a controller 1421, a memory 1422, a network interface 1423, and a radio communication interface 1425.

The controller 1421 may be, for example, a CPU or a DSP, and operates various functions of the base station device 1420 at a higher layer. For example, the controller 1421 may perform the communication method described in FIGS. 8-10. For example, the controller 1421 generates data packets based on data in signals processed by the radio communication interface 1425, and passes the generated packets via the network interface 1423. The controller 1421 may bundle data from multiple baseband processors to generate bundled packets, and pass the generated bundled packets. The controller 1421 may have logical functions that perform controls such as radio resource control, radio bearer control, mobility management, admission control, and scheduling. The controls can be performed in conjunction with a nearby gNB or core network node. The memory 1422 includes a RAM and a ROM, and stores a program executed by the controller 1421 and various types of control data such as a terminal list, transmission power data, and scheduling data.

The network interface 1423 is a communication interface for connecting the base station device 1420 to the core network 1424 (e.g. 5G core network). The controller 1421 may communicate with a core network node or another gNB via the network interface 1423. In this case, the gNB 1400 and the core network node or other gNBs may be connected to each other through a logical interface such as an NG interface and an Xn interface. The network interface 1423 may also be a wired communication interface or a radio communication interface for a wireless backhaul line. If the network interface 1423 is a radio communication interface, compared with the frequency band used by the radio communication interface 1425, the network interface 1423 can use a higher frequency band for wireless communication.

The radio communication interface 1425 supports any cellular communication scheme such as the 5G NR, and provides a wireless connection to a terminal located in a cell of the gNB 1400 via an antenna 1410. The radio communication interface 1425 may generally include, for example, a baseband (BB) processor 1426 and an RF circuit 1427. The BB processor 1426 may perform, for example, encoding/decoding, modulation/demodulation, and multiplexing/demultiplexing, and execute various types of signal processing in layers such as the physical layer, the MAC layer, the RLC layer, the PDCP layer, and the SDAP layer. As an alternative of the controller 1421, the BB processor 1426 may have a part or all of the above-mentioned logical functions. The BB processor 1426 may be a memory storing a communication control program, or a module including a processor and related circuits configured to execute the program. Updating the program can change the function of the BB processor 1426. The module may be a card or a blade inserted into a slot of the base station device 1420. Alternatively, the module may be a chip mounted on a card or a blade. Meanwhile, the RF circuit 1427 may include, for example, a mixer, a filter, and an amplifier, and transmits and receives a wireless signal via the antenna 1410. Although FIG. 13 illustrates an example in which one RF circuit 1427 is connected to one antenna 1410, the present disclosure is not limited to this illustration, but one RF circuit 1427 may be connected to multiple antennas 1410 at the same time.

As shown in FIG. 13, the radio communication interface 1425 may include a plurality of BB processors 1426. For example, the plurality of BB processors 1426 may be compatible with multiple frequency bands used by gNB 1400. As shown in FIG. 13, the radio communication interface 1425 may include a plurality of RF circuits 1427. For example, the plurality of RF circuits 1427 may be compatible with multiple antenna elements. Although FIG. 13 shows an example in which the radio communication interface 1425 includes a plurality of BB processors 1426 and a plurality of RF circuits 1427, the radio communication interface 1425 may also include a single BB processor 1426 or a single RF circuit 1427.

In the gNB 1400 illustrated in FIG. 13, one or more of the units for implementing the method flows described with reference to FIGS. 8-10 may be implemented in the radio communication interface 1425. Alternatively, at least a part of these components may be implemented in the controller 1421. As an example, the gNB 1400 includes a part (for example, the BB processor 1426) or the entire of the radio communication interface 1425 and/or a module including the controller 1421, and the one or more components may be implemented in the module. In this case, the module may store a program for allowing the processor to function as the one or more components (in other words, a program for allowing the processor to perform operations of the one or more components), and may execute the program. As another example, a program for allowing the processor to function as the one or more components may be installed in the gNB 1400, and the radio communication interface 1425 (for example, the BB processor 1426) and/or the controller 1421 may execute the program. As described above, as a device including the one or more components, the gNB 1400, the base station device 1420 or the module may be provided, as well as the program for allowing processor to function as the one or more components may be provided. In addition, a readable medium in which the program is recorded may be provided.

Second application example of base station

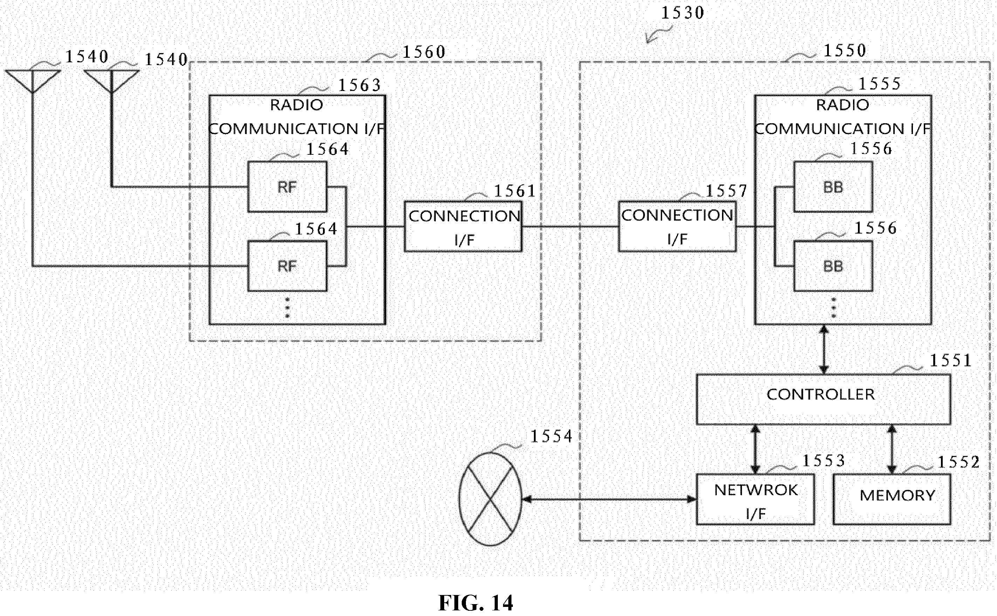

FIG. 14 is a block diagram showing a second example of a schematic configuration of a base station to which the technology of the present disclosure can be applied. In FIG. 14, the base station is shown as gNB 1530. The gNB 1530 includes multiple antennas 1540, base station device 1550, and RRH 1560. The RRH 1560 and each antenna 1540 may be connected to each other via an RF cable. The base station device 1550 and the RRH 1560 may be connected to each other via a high-speed line such as a fiber optic cable. In an implementation, the gNB 1530 (or the base station device 1550) herein may correspond to the base station described in above embodiments.

The antennas 1540 includes multiple antenna elements. The antennas 1540, for example, can be arranged into a matrix of antenna arrays, and are used by the base station device 1550 to transmit and receive wireless signals. For example, multiple antennas 1540 may be compatible with multiple frequency bands used by gNB 1530.

The base station device 1550 includes a controller 1551, a memory 1552, a network interface 1553, a radio communication interface 1555, and a connection interface 1557. The controller 1551, the memory 1552, and the network interface 1553 are the same as the controller 1421, the memory 1422, and the network interface 1423 described with reference to FIG. 13.

The radio communication interface 1555 supports any cellular communication scheme such as 5G NR, and provides wireless communication to a terminal located in a sector corresponding to the RRH 1560 via the RRH 1560 and the antenna 1540. The radio communication interface 1555 may generally include, for example, a BB processor 1556. The BB processor 1556 is the same as the BB processor 1426 described with reference to FIG. 13 except that the BB processor 1556 is connected to the RF circuit 1564 of the RRH 1560 via the connection interface 1557. As shown in FIG. 14, the radio communication interface 1555 may include a plurality of BB processors 1556. For example, multiple BB processors 1556 may be compatible with multiple frequency bands used by gNB 1530. Although FIG. 14 shows an example in which the radio communication interface 1555 includes a plurality of BB processors 1556, the radio communication interface 1555 may also include a single BB processor 1556.

The connection interface 1557 is an interface for connecting the base station device 1550 (radio communication interface 1555) to the RRH 1560. The connection interface 1557 may also be a communication module for communication in the above-mentioned high-speed line connecting the base station device 1550 (radio communication interface 1555) to the RRH 1560.

The RRH 1560 includes a connection interface 1561 and a radio communication interface 1563.

The connection interface 1561 is an interface for connecting the RRH 1560 (radio communication interface 1563) to the base station device 1550. The connection interface 1561 may also be a communication module for communication in the above-mentioned high-speed line.

The radio communication interface 1563 transmits and receives wireless signals via the antenna 1540. The radio communication interface 1563 may generally include, for example, an RF circuit 1564. The RF circuit 1564 may include, for example, a mixer, a filter, and an amplifier, and transmits and receives wireless signals via the antenna 1540. Although FIG. 14 illustrates an example in which one RF circuit 1564 is connected to one antenna 1540, the present disclosure is not limited to this illustration, but one RF circuit 1564 may be connected to multiple antennas 1540 at the same time.

As shown in FIG. 14, the radio communication interface 1563 may include a plurality of RF circuits 1564. For example, the plurality of RF circuits 1564 may support multiple antenna elements. Although FIG. 14 shows an example in which the radio communication interface 1563 includes a plurality of RF circuits 1564, the radio communication interface 1563 may include a single RF circuit 1564.

In the gNB 1500 shown in FIG. 14, one or more of the units for implementing the method flows described with reference to FIGS. 8-10 may be implemented in the radio communication interface 1525. Alternatively, at least a part of these components may be implemented in the controller 1521. For example, the gNB 1500 includes a part (for example, the BB processor 1526) or the entire of the radio communication interface 1525, and/or a module including the controller 1521, and one or more components may be implemented in the module. In this case, the module may store a program for allowing the processor to function as one or more components (in other words, a program for allowing the processor to perform operations of one or more components), and may execute the program. As another example, a program for allowing the processor to function as one or more components may be installed in the gNB 1500, and the radio communication interface 1525 (for example, the BB processor 1526) and/or the controller 1521 may execute the program. As described above, as a device including one or more components, the gNB 1500, the base station device 1520, or a module may be provided, and a program for allowing the processor to function as one or more components may be provided. In addition, a readable medium in which the program is recorded may be provided.

First application example of user equipment

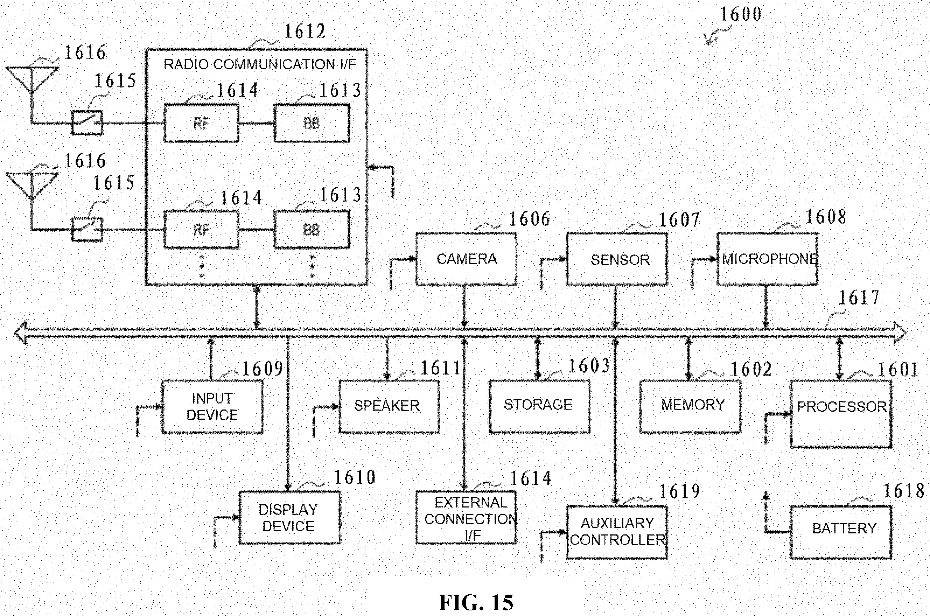

FIG. 15 is a block diagram showing an example of a schematic configuration of a smartphone 1600 to which the technology of the present disclosure can be applied. In an example, the smart phone 1600 may be implemented as the aggregation initiating UE or aggregation cooperating UE described in the embodiments of the present disclosure.

The smartphone 1600 includes a processor 1601, a memory 1602, a storage device 1603, an external connection interface 1604, a camera device 1606, a sensor 1607, a microphone 1608, an input device 1609, a display device 1610, a speaker 1611, a radio communication interface 1612, one or more antenna switches 1615, one or more antennas 1616, a bus 1617, a battery 1618, and an auxiliary controller 1619.

The processor 1601 may be, for example, a CPU or a system on chip (SoC), and controls functions of an application layer and another layer of the smartphone 1600. The processor 1601 may include or serve as the processing circuitry 101 for performing the method flows described in FIGS. 4 and 8-10. The memory 1602 includes a RAM and a ROM, and stores data and programs executed by the processor 1601 for implementing the communication method described with reference to FIGS. 4 and 8-10. The storage device 1603 may include a storage medium such as a semiconductor memory and a hard disk. The external connection interface 1604 is an interface for connecting external devices such as a memory card and a universal serial bus (USB) device to the smartphone 1600.

The camera device 1606 includes an image sensor such as a charge-coupled device (CCD) and a complementary metal oxide semiconductor (CMOS), and generates a captured image. The sensor 1607 may include a set of sensors such as a measurement sensor, a gyroscope sensor, a geomagnetic sensor, and an acceleration sensor. The microphone 1608 converts a sound input to the smartphone 1600 into an audio signal. The input device 1609 includes, for example, a touch sensor, a keypad, a keyboard, a button, or a switch configured to detect a touch on the screen of the display device 1610, and receives an operation or information input from a user. The display device 1610 includes a screen such as a liquid crystal display (LCD) and an organic light emitting diode (OLED) display, and displays an output image of the smartphone 1600. The speaker 1611 converts an audio signal output from the smartphone 1600 into a sound.

The radio communication interface 1612 supports any cellular communication scheme such as 4G LTE, 5G NR or the like, and performs wireless communication. The radio communication interface 1612 may generally include, for example, a BB processor 1613 and an RF circuit 1614. The BB processor 1613 may perform, for example, encoding/decoding, modulation/demodulation, and multiplexing/demultiplexing, and perform various types of signal processing for wireless communication. Meanwhile, the RF circuit 1614 may include, for example, a mixer, a filter, and an amplifier, and transmits and receives wireless signals via the antenna 1616. The radio communication interface 1612 may be a chip module on which a BB processor 1613 and an RF circuit 1614 are integrated. As shown in FIG. 15, the radio communication interface 1612 may include multiple BB processors 1613 and multiple RF circuits 1614. Although FIG. 15 illustrates an example in which the radio communication interface 1612 includes a plurality of BB processors 1613 and a plurality of RF circuits 1614, the radio communication interface 1612 may also include a single BB processor 1613 or a single RF circuit 1614.

In addition, in addition to the cellular communication scheme, the radio communication interface 1612 may support other types of wireless communication scheme, such as a short-range wireless communication scheme, a near field communication scheme, and a wireless local area network (LAN) scheme. In this case, the radio communication interface 1612 may include a BB processor 1613 and an RF circuit 1614 for each wireless communication scheme.

Each of the antenna switches 1615 switches a connection destination of the antenna 1616 between a plurality of circuits included in the radio communication interface 1612 (for example, circuits for different wireless communication schemes).

The antennas 1616 includes multiple antenna elements. The antennas 1616, for example, can be arranged into a matrix of antenna arrays, and are used by the radio communication interface 1612 to transmit and receive wireless signals. The smart phone 1600 can includes one or more antenna panels (not shown).

In addition, the smartphone 1600 may include an antenna 1616 for each wireless communication scheme. In this case, the antenna switch 1615 may be omitted from the configuration of the smartphone 1600.

The bus 1617 connects the processor 1601, the memory 1602, the storage device 1603, the external connection interface 1604, the camera device 1606, the sensor 1607, the microphone 1608, the input device 1609, the display device 1610, the speaker 1611, the radio communication interface 1612, and the auxiliary controller 1619 to each other. The battery 1618 supplies power to each block of the smartphone 1600 shown in FIG. 15 via a feeder, and the feeder is partially shown as a dashed line in the figure. The auxiliary controller 1619 operates the minimum necessary functions of the smartphone 1600 in the sleep mode, for example.

In the smart phone 1600 shown in FIG. 15, one or more of the units for implementing the method flows illustrated in FIGS. 4 and 8-10 may be implemented in the radio communication interface 1612. Alternatively, at least a part of these components may be implemented in the processor 1601 or the auxiliary controller 1619. As an example, the smart phone 1600 includes a part (for example, the BB processor 1613) or the entire of the radio communication interface 1612, and/or a module including the processor 1601 and/or the auxiliary controller 1619, and one or more components may be implemented in this module. In this case, the module may store a program for allowing the processor to function as one or more components (in other words, a program for allowing the processor to perform operations of one or more components), and may execute the program. As another example, a program for allowing the processor to function as one or more components may be installed in the smart phone 1600, and the radio communication interface 1612 (for example, the BB processor 1613), the processor 1601, and/or the auxiliary controller 1619 can execute this program. As described above, as a device including one or more components, a smart phone 1600 or a module may be provided, and a program for allowing a processor to function as one or more components may be provided. In addition, a readable medium in which the program is recorded may be provided.

Second application example of user device

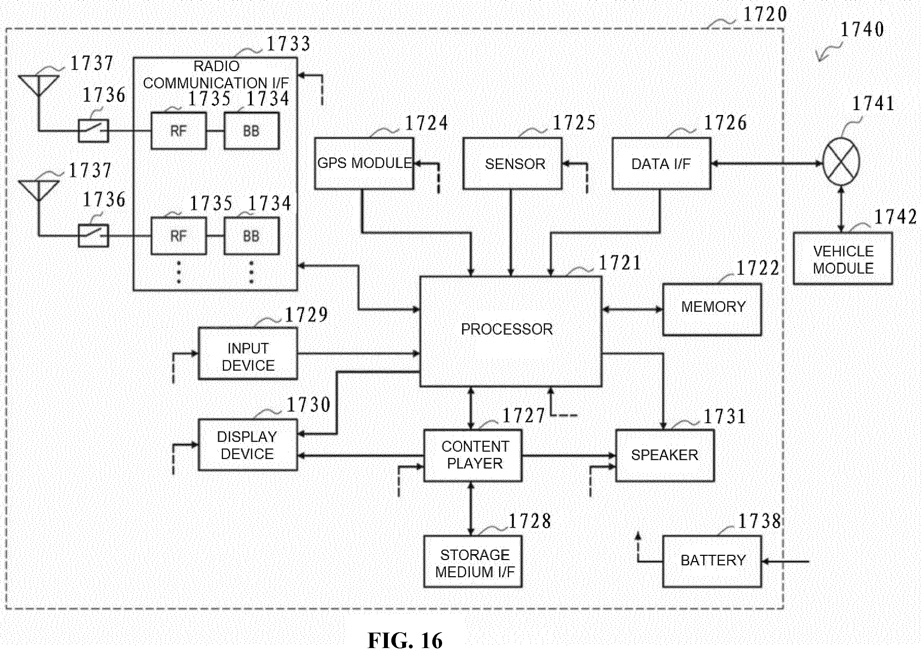

FIG. 16 is a block diagram showing an example of a schematic configuration of a car navigation device 1720 to which the technology of the present disclosure can be applied. The car navigation device 1720 can be implemented as the UE described in the embodiments of the present disclosure. The car navigation device 1720 includes a processor 1721, a memory 1722, a Global Positioning System (GPS) module 1724, a sensor 1725, a data interface 1726, a content player 1727, a storage medium interface 1728, an input device 1729, a display device 1730, a speaker 1731, and a radio communication interface 1733, one or more antenna switches 1736, one or more antennas 1737, and a battery 1738. In one example, the car navigation device 1720 may be implemented as the aggregation initiating UE or aggregation cooperating UE described in the present disclosure.

The processor 1721 may be, for example, a CPU or a SoC, and controls navigation functions and other functions of the car navigation device 1720. The memory 1722 includes a RAM and a ROM, and stores data and programs executed by the processor 1721.

The GPS module 1724 uses a GPS signal received from a GPS satellite to measure the position (such as latitude, longitude, and altitude) of the car navigation device 1720. The sensor 1725 may include a set of sensors such as a gyroscope sensor, a geomagnetic sensor, and an air pressure sensor. The data interface 1726 is connected to, for example, an in-vehicle network 1741 via a terminal not shown, and acquires data (such as vehicle speed data) generated by the vehicle.

The content player 1727 reproduces content stored in a storage medium such as a CD and a DVD, which is inserted into the storage medium interface 1728. The input device 1729 includes, for example, a touch sensor, a button, or a switch configured to detect a touch on the screen of the display device 1730, and receives an operation or information input from a user. The display device 1730 includes a screen such as an LCD or OLED display, and displays an image of a navigation function or reproduced content. The speaker 1731 outputs the sound of the navigation function or the reproduced content.

The radio communication interface 1733 supports any cellular communication scheme such as 4G LTE or 5G NR, and performs wireless communication. The radio communication interface 1733 may generally include, for example, a BB processor 1734 and an RF circuit 1735. The BB processor 1734 may perform, for example, encoding/decoding, modulation/demodulation, and multiplexing/demultiplexing, and perform various types of signal processing for wireless communication. Meanwhile, the RF circuit 1735 may include, for example, a mixer, a filter, and an amplifier, and transmit and receive wireless signals via the antenna 1737. The radio communication interface 1733 may also be a chip module on which a BB processor 1734 and an RF circuit 1735 are integrated. As shown in FIG. 15, the radio communication interface 1733 may include a plurality of BB processors 1734 and a plurality of RF circuits 1735. Although FIG. 15 shows an example in which the radio communication interface 1733 includes a plurality of BB processors 1734 and a plurality of RF circuits 1735, the radio communication interface 1733 may also include a single BB processor 1734 or a single RF circuit 1735.

In addition, in addition to the cellular communication scheme, the radio communication interface 1733 may support other types of wireless communication scheme, such as a short-range wireless communication scheme, a near field communication scheme, and a wireless LAN scheme. In this case, the radio communication interface 1733 may include a BB processor 1734 and an RF circuit 1735 for each wireless communication scheme.

Each of the antenna switches 1736 switches the connection destination of the antenna 1737 between a plurality of circuits (for example, circuits for different wireless communication schemes) included in the radio communication interface 1733.

The antennas 1737 includes multiple antenna elements. The antennas 1737, for example, can be arranged into a matrix of antenna arrays, and are used by the radio communication interface 1733 to transmit and receive wireless signals.

In addition, the car navigation device 1720 may include an antenna 1737 for each wireless communication scheme. In this case, the antenna switch 1736 may be omitted from the configuration of the car navigation device 1720.

The battery 1738 supplies power to each block of the car navigation device 1720 shown in FIG. 15 via a feeder, and the feeder is partially shown as a dashed line in the figure. The battery 1738 accumulates power provided from the vehicle.

In the car navigation device 1720 shown in FIG. 15, one or more of the units for performing the method flows in FIGS. 4 and 8-10 may be implemented in the radio communication interface 1733. Alternatively, at least a part of these components may be implemented in the processor 1721. As an example, the car navigation device 1720 includes a part (for example, the BB processor 1734) or the entire of the radio communication interface 1733, and/or a module including the processor 1721, and one or more components may be implemented in the module. In this case, the module may store a program for allowing the processor to function as one or more components (in other words, a program for allowing the processor to perform operations of one or more components), and may execute the program. As another example, a program for allowing the processor to function as one or more components may be installed in the car navigation device 1720, and the radio communication interface 1733 (for example, the BB processor 1734) and/or the processor 1721 may Execute the program. As described above, as a device including one or more components, a car navigation device 1720 or a module may be provided, and a program for allowing the processor to function as one or more components may be provided. In addition, a readable medium in which the program is recorded may be provided.

The technology of the present disclosure may also be implemented as an in-vehicle system (or vehicle) 1740 including one or more of a car navigation device 1720, an in-vehicle network 1741, and a vehicle module 1742. The vehicle module 1742 generates vehicle data such as vehicle speed, engine speed, and failure information, and outputs the generated data to the in-vehicle network 1741.

Although the exemplary embodiments of the present disclosure have been described with reference to the accompanying drawings, the present disclosure is certainly not limited to the above examples. Those skilled in the art may achieve various adaptions and modifications within the scope of the appended claims, and it will be appreciated that these adaptions and modifications certainly fall into the scope of the technology of the present disclosure.

For example, in the above embodiments, the multiple functions included in one unit may be implemented by separate devices. Alternatively, in the above embodiments, the multiple functions implemented by multiple units may be implemented by separate devices, respectively. In additions, one of the above functions may be implemented by multiple units. Needless to say, such configurations are included in the scope of the technology of the present disclosure.

In this specification, the steps described in the flow diagrams include not only the processes performed sequentially in chronological order, but also the processes performed in parallel or separately but not necessarily performed in chronological order. Furthermore, even in the steps performed in chronological order, needless to say, the order may be changed appropriately.

Although the present disclosure and its advantages have been described in detail, it will be appreciated that various changes, replacements and transformations may be made without departing from the spirit and scope of the present disclosure as defined by the appended claims. In addition, the terms "include", "comprise" or any other variants of the embodiments of the present disclosure are intended to be non-exclusive inclusion, such that the process, method, article or device including a series of elements includes not only these elements, but also those that are not listed specifically, or those that are inherent to the process, method, article or device. In case of further limitations, the element defined by the sentence "include one" does not exclude the presence of additional same elements in the process, method, article or device including this element.

**Claims**

1. An electronic device for an aggregation initiating user equipment (UE), comprising:
   processing circuitry configured to:

   obtain transmission condition information of the aggregation initiating UE and at least one aggregation cooperating UE;
   based on the obtained transmission condition information, divide transmission data into a first data portion to be transmitted by the aggregation initiating UE and at least one second data portion to be transmitted respectively by the at least one aggregation cooperating UE;
   transmit the first data portion to an aggregation server via a base station; and
   transmit the at least one second data portion to the at least one aggregation cooperating UE, respectively, for the aggregation cooperating UE to transmit respective second data portion to the aggregation server via the base station, wherein the first data portion and the at least one second data portion are aggregated and transmitted to a target node by the aggregation server.

2. The electronic device according to Claim 1, wherein the transmission condition information comprises network state information of the aggregation initiating UE and the at least one aggregation cooperating UE detected by a network state management server.

3. The electronic device according to Claim 2, wherein the processing circuitry is further configured to:

   a) send a network state request including IP addresses of the aggregation initiating UE and the at least one aggregation cooperating UE to the network state management server, and as a response to the network state request, receive the network state information tested based on the IP address of each of the UEs from the network state management server; or
   b) receive the network state information of the aggregation initiating UE pushed by the network state management server, and receive, from the at least one aggregation cooperating UE, the network state information pushed by the network state management server to respective aggregation cooperating UE.

4. The electronic device according to Claim 2, wherein the network state information includes at least one of average transmission rate, packet loss rate and end-to-end latency.

5. The electronic device according to Claim 1, wherein the aggregation server is implemented at any of the target node, the base station, a public network, or a core network of a wireless communication system.

6. The electronic device according to Claim 1, wherein the transmission condition information includes resource allocation information received from the base station, the resource allocation information indicating resource blocks (RB) allocated by the base station for the aggregation initiating UE and the at least one aggregation cooperating UE respectively and associated UE identifiers, and wherein the processing circuitry is further configured to:
divide the transmission data based on the RBs usable by the aggregation initiating UE and the at least one aggregation cooperating UE.

7. The electronic device according to Claim 6, wherein the processing circuitry is further configured to:

   send, to the base station and via uplink control information (UCI), a cooperation request indicating cooperative transmission is required; and as a response to the cooperation request, receive the resource allocation information scheduled by the base station based on channel conditions of the aggregation initiating UE and the at least one aggregation cooperating UE.

8. The electronic device according to Claim 6, wherein the processing circuitry is further configured to transmit respective second data portion and resource allocation information to each of the at least one aggregation cooperating UE over Sidelink.

9. The electronic device according to Claim 6, where the resource allocation information includes uplink configured grant or uplink dynamic grant.

10. The electronic device according to Claim 7, wherein the dividing is performed at an application layer or a service data adaptation protocol (SDAP) layer.

11. The electronic device according to Claim 1, wherein the processing circuitry is further configured to:

   send a cooperative transmission request to the at least one aggregation cooperating UE; and receive, from the at least one aggregation cooperating UE, a cooperation confirmation message which indicates that corresponding aggregation cooperating UE is available for cooperative transmission and includes an IP address of the aggregation cooperating UE.

12. The electronic device according to Claim 1, wherein the processing circuitry is further configured to:

receive the transmission condition information of a set of aggregation cooperating UEs from the base station; and
based on the received transmission condition information, select the at least one aggregation cooperating UE from the set of aggregation cooperating UEs.

13. An electronic device for an aggregation cooperating user equipment (UE), comprising:
processing circuitry configured to:

   receive a second data portion of transmission data from an aggregation initiating UE, wherein the transmission data was divided, based on transmission condition information of the aggregation initiating UE and at least one aggregation cooperating UE, into a first data portion to be transmitted to an aggregation server by the aggregation initiating UE and at least one second data portion to be transmitted to the aggregation server by the at least one aggregation cooperating UE; and
transmit the second data portion to the aggregation server via a base station,
wherein the first data portion and the at least one second data portion are aggregated and transmitted to a target node by the aggregation server.

14. The electronic device according to Claim 13, wherein the transmission condition information includes network state information detected by a network state management server.

15. The electronic device according to Claim 14, wherein the aggregation server is implemented at any of the target node, the base station, a public network, or a core network of a wireless communication system.

16. The electronic device according to Claim 15, wherein the transmission condition information includes resource allocation information, the resource allocation information indicating resource blocks (RBs) allocated by the base station for the aggregated initiating UE and the at least one aggregation cooperating UE respectively and associated UE identifiers, and wherein the processing circuitry is further configured to:
receive corresponding resource allocation information from the aggregation initiating UE.

17. The electronic device according to Claim 13, wherein the processing circuitry is further configured to:

   receive a cooperative transmission request from the aggregation initiating UE; and
send, to the aggregation initiating UE, a cooperation confirmation message which indicates that the aggregation cooperating UE is available for cooperative transmission and includes an IP address of the aggregation cooperating UE.

18. The electronic device according Claim 13, wherein the processing circuitry is further configured to:
add an IP address of the aggregation cooperating UE as a source address and IP addresses of the aggregation server and the target node as a destination address in the received second data portion.

19. An electronic device for a base station, comprising:
processing circuitry configured to:

send, to an aggregation initiating user equipment (UE), resource allocation information for the aggregation initiating UE and at least one aggregation cooperating UE;
receive a first data portion and at least one second data portion of transmission data from the aggregation initiating UE and the at least one aggregation cooperating UE, respectively, wherein the first data portion and the at least one second data portion of the transmission data were divided by the aggregation initiating UE based on the resource allocation information; and
aggregate the first data portion and the at least one second data portion and transmit aggregated data to a target node.

20. The electronic device according to Claim 19, wherein the processing circuitry is further configured to:

receive, from the aggregation initiating UE and via uplink control information (UCI), a cooperation request indicating that cooperative transmission is required; and
based on channel conditions of the aggregated initiating UE and at least one aggregated cooperating UE, allocate transmission resources for each of the UEs.

21. The electronic device according to Claim 19, wherein the resource allocation information includes uplink configured grant or uplink dynamic grant.

22. The electronic device according to Claim 19, wherein the processing circuitry is further configured to:
in response to data reception quality not meeting a predetermined requirement or in accordance with a time period, reallocation resources for at least one of the aggregation initiating UE and the at least one aggregation cooperating UE.

23. A communication method, comprising:

obtaining transmission condition information of an aggregation initiating UE and at least one aggregation cooperating UE;
based on the obtained transmission condition information, dividing transmission data into a first data portion to be transmitted by the aggregation initiating UE and at least one second data portion to be transmitted respectively by the at least one aggregation cooperating UE;
transmitting the first data portion to an aggregation server via a base station; and
transmitting the at least one second data portion to the at least one aggregation cooperating UE, respectively, for the aggregation cooperating UE to transmit respective second data portion to the aggregation server via the base station, wherein the first data portion and the at least one second data portion are aggregated and transmitted to a target node by the aggregation server.

24. A communication method, comprising:

receiving a second data portion of transmission data from an aggregation initiating UE, wherein the transmission data was divided, based on transmission condition information of the aggregation initiating UE and at least one aggregation cooperating UE, into a first data portion to be transmitted to an aggregation server by the aggregation initiating UE and at least one second data portion to be transmitted to the aggregation server by the at least one aggregation cooperating UE; and
transmitting the second data portion to the aggregation server via a base station, wherein the first data portion and the at least one second data portion are aggregated and transmitted to a target node by the aggregation server.

25. A communication method, comprising:

sending, to an aggregation initiating user equipment (UE), resource allocation information for the aggregation initiating UE and at least one aggregation cooperating UE;
receiving a first data portion and at least one second data portion of transmission data from the aggregation initiating UE and the at least one aggregation cooperating UE, respectively, wherein the first data portion and the at least one second data portion of the transmission data were divided by the aggregation initiating UE based on the resource allocation information; and
aggregating the first data portion and the at least one second data portion and transmit aggregated data to a target node.

**26.** A computer-readable storage medium including executable instructions which, when executed, perform the communication method according to any of Claims 23-25.

Data Source

Aggregation Initiating Node

Base Station A

Aggregation Cooperating Base Station B
Node 1

Aggregation Cooperating Base Station C
Node 2

Public
Network

Aggregation Server

Transmission Condition
Management Server

Target Node

**FIG. 1**

**FIG. 2**

**FIG. 3**

**FIG. 4**

**FIG. 5**

**FIG. 6**

1 frame=10ms

Subframe=1ms

| 0 | 1 | 2 | 3 | 4 | 5 | 6 | 7 | 8 | ... |

1 subframe= $N_{\text{slot}}^{\text{subframe},\mu}$ slots

Slot

| 0 | ... |

1 slot= $N_{\text{symb}}^{\text{slot}}$ symbols

OFDM symbol

Subcarrier

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 1 | | | | | | | | | | | | | | |
| 2 | | | | | | | | | | | | | | |
| 3 | | | | | | | | | | | | | | |
| 4 | | | | | | | | | | | | | | |
| 5 | | | | | | | | | | | | | | |
| 6 | | | | | | | | | | | | | | |
| 7 | | | | | | | | | | | | | | |
| 8 | | | | | | | | | | | | | | |
| 9 | | | | | | | | | | | | | | |
| 10 | | | | | | | | | | | | | | |
| 11 | | | | | | | | | | | | | | |

**FIG. 7**

| Aggregation<br>Initiating UE | Aggregation<br>Cooperating UE | Base Station | Target Node |

S20. cooperative transmission request

S21.resource allocation information

S22. Divide
transmission
data

S23.resource allocation information

S24.second data portion

S25.second data portion

S26.first data portion

S27.Aggregate
transmission
data

S28.transmission data

**FIG. 8**

FIG. 9

**FIG. 10**

FIG. 11

**1300**

**FIG. 12**

1400

1410   1410

1420

1425

## RADIO COMMUNICATION I/F

1427                1426

| RF | | BB |

1427                1426

| RF | | BB |

1421

CONTROLLER

1424

1423              1422

| NETWORK I/F | | MEMORY |

**FIG. 13**

FIG. 14

**FIG. 15**

**FIG. 16**

EP 4 661 488 A1

## INTERNATIONAL SEARCH REPORT

| International application No. |
|---|
| **PCT/CN2024/073788** |

### A. CLASSIFICATION OF SUBJECT MATTER

H04W28/08(2023.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNKI, CNTXT, 3GPP, WPABSC, ENTXT: 协作, 协同, 协助, 辅助, 帮助, 第一数据, 第二数据, 发送, 传输, cooperat+, collaborat+, assist+, help, first, second, data, transmit, send

### C. DOCUMENTS CONSIDERED TO BE RELEVANT

| Category* | Citation of document, with indication, where appropriate, of the relevant passages | Relevant to claim No. |
|---|---|---|
| X | CN 113596782 A (HUAWEI TECHNOLOGIES CO., LTD.) 02 November 2021 (2021-11-02) description, paragraphs 98 and 143-179, and figure 12 | 1-26 |
| A | CN 113891310 A (HUAWEI TECHNOLOGIES CO., LTD.) 04 January 2022 (2022-01-04) entire document | 1-26 |
| A | CN 103039109 A (INTERDIGITAL TECHNOLOGY CORP.) 10 April 2013 (2013-04-10) entire document | 1-26 |
| A | CN 107079416 A (QUALCOMM INC.) 18 August 2017 (2017-08-18) entire document | 1-26 |
| A | US 2013039297 A1 (INDUSTRIAL TECHNOLOGY RESEARCH INSTITUTE et al.) 14 February 2013 (2013-02-14) entire document | 1-26 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 April 2024** | **23 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/073788**

| Patent document cited in search report | | | Publication date (day/month/year) | Patent family member(s) | | | Publication date (day/month/year) |
|---|---|---|---|---|---|---|---|
| CN | 113596782 | A | 02 November 2021 | None | | | |
| CN | 113891310 | A | 04 January 2022 | None | | | |
| CN | 103039109 | A | 10 April 2013 | JP | 2022163174 | A | 25 October 2022 |
| | | | | KR | 20140116554 | A | 02 October 2014 |
| | | | | JP | 2015164317 | A | 10 September 2015 |
| | | | | EP | 2534875 | A1 | 19 December 2012 |
| | | | | EP | 2534875 | B1 | 08 December 2021 |
| | | | | US | 2016323790 | A1 | 03 November 2016 |
| | | | | US | 9973322 | B2 | 15 May 2018 |
| | | | | JP | 2020099078 | A | 25 June 2020 |
| | | | | JP | 7267962 | B2 | 02 May 2023 |
| | | | | IL | 221420 | A0 | 31 October 2012 |
| | | | | IL | 221420 | A | 30 March 2017 |
| | | | | US | 2013176988 | A1 | 11 July 2013 |
| | | | | US | 9392515 | B2 | 12 July 2016 |
| | | | | JP | 2018061283 | A | 12 April 2018 |
| | | | | JP | 2013520096 | A | 30 May 2013 |
| | | | | EP | 4009733 | A1 | 08 June 2022 |
| | | | | WO | 2011100492 | A1 | 18 August 2011 |
| | | | | KR | 20120118502 | A | 26 October 2012 |
| | | | | KR | 101480929 | B1 | 12 January 2015 |
| CN | 107079416 | A | 18 August 2017 | WO | 2016070637 | A1 | 12 May 2016 |
| | | | | WO | 2016070352 | A1 | 12 May 2016 |
| | | | | EP | 3216285 | A1 | 13 September 2017 |
| | | | | EP | 3216285 | A4 | 11 July 2018 |
| | | | | EP | 3216285 | B1 | 17 March 2021 |
| | | | | KR | 20170081648 | A | 12 July 2017 |
| | | | | KR | 102415434 | B1 | 30 June 2022 |
| | | | | JP | 2017534202 | A | 16 November 2017 |
| | | | | JP | 6586163 | B2 | 02 October 2019 |
| | | | | US | 2017318586 | A1 | 02 November 2017 |
| | | | | US | 10757702 | B2 | 25 August 2020 |
| US | 2013039297 | A1 | 14 February 2013 | US | 2013039295 | A1 | 14 February 2013 |
| | | | | US | 8873491 | B2 | 28 October 2014 |
| | | | | TW | 201316732 | A | 16 April 2013 |
| | | | | US | 2013039272 | A1 | 14 February 2013 |
| | | | | TW | 201308956 | A | 16 February 2013 |
| | | | | TWI | 472202 | B | 01 February 2015 |
| | | | | TW | 201320692 | A | 16 May 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023100920366